# EUROPEAN PATENT SPECIFICATION

(11) **EP 0 960 178 B1**
(45) Date of publication and mention of the grant of the patent: **24.10.2001**
(21) Application number: 97954764.3
(22) Date of filing: 09.12.1997
(51) Int. Cl.: C10M 159/18, C07F 11/00, C10M 135/18, C10M 137/10, C10N 30/06

(54) **LUBRICATING OIL COMPOSITIONS CONTAINING ORGANIC MOLYBDENUM COMPLEXES**
ORGANISCHE MOLYBDÄNKOMPLEXE ENTHALTENDE SCHMIERÖLZUSAMMENSETZUNGEN
COMPOSITIONS D'HUILE LUBRIFIANTE CONTENANT DES COMPLEXES DE MOLYBDENE ORGANIQUES

(30) Priority: 13.12.1996 US 766831; 13.12.1996 US 766827; 13.12.1996 US 766832; 13.12.1996 US 766830; 13.11.1997 US 969277
(43) Date of publication of application: 01.12.1999
(73) Proprietor: Infineum USA L.P., Linden, New Jersey 07036 (US)
(72) Inventor: BAXTER, Daniella, Maria, Veronica, Wantage,Oxon OX12 7HF (GB); COYLE, Catherine, Louise, Mendham, NJ 07495 (US); CREEGAN, Kathleen, Marie, Far Hills, NJ 07931 (US); FANG, Howard, L., Bridgewater, NJ 08807 (US); FRANCISCO, Manuel, Anthony, Washington, NJ 07882 (US); GIBSON, Frederick, Alastair, Berkshire RG20 9EZ (GB); GLYDE, Roger, Oxfordshire OX18 2BN (GB); GUZI, Peter, John, Baton Rouge, LA 70820 (US); LETA, Daniel, Flemington, NJ 08822 (US); MCCONNACHIE, Jonathan, Martin, Flemington, NJ 08822 (US); PICTROSKI, Charles, Frederick, Glen Gardner, NJ 08826 (US); STIEFEL, Edward, Ira, Bridgewater, NJ 08807 (US); ARUNASALAM, Velautha, Cumaran, Middlesex UB6 0DH (GB)
(74) Representative: Mansell, Keith Rodney
(86) International application number: IB9701656
(87) International publication number: WO9826030

(56) References cited:
- US-A- 2 951 040
- US-A- 4 430 442
- US-A- 4 540 481
- US-A- 4 542 121
- US-A- 4 978 464
- MITCHELL PHILIP C.H.: "OIL-SOLUBLE Mo-S COMPOUNDS AS LUBRICANT ADDITIVES" WEAR, vol. 100, 1984, pages 281-300, XP002062228

## Description

### FIELD OF THE INVENTION

The present invention relates to lubricant compositions containing molybdenum compounds and methods of making them.

### BACKGROUND OF THE INVENTION

Molybdenum disulfide is a known lubricant additive. Unfortunately, it has certain known disadvantages some of which are caused by its insolubility in lubricating oils. Therefore, certain oil-soluble molybdenum sulfur-containing compounds have been proposed and investigated as lubricant additives. US-A-2,951,040; - 3,419,589; -3,840,463; -4,966,719; -4,995,996; and - 4,978,464 are representative of patent specifications describing both molybdenum and sulfur.

Molybdenum compounds for use as lubricant additives described in the art are principally dinuclear molybdenum compounds, characterised by the oxidation state Mo(V). The present invention concerns use of trinuclear molybdenum compounds as lubricant additives, i.e. characterised by a different oxidation state (Mo(IV) it is surprisingly found, according to the present invention, that trinuclear molybdenum compounds have improved properties as lubricating additives compared with dinuclear molybdenum compounds as evidenced by test results hereinafter, thus ameliorating the problem of improved lubricant performance demands from original equipment manufacturers (OEM's). The person skilled in the art would not be able to predict the behavior of Mo(IV) compounds in lubricating oils from the behavior of the dinuclear compounds. More specifically, in view of the difference in oxidation state, the performance of such compounds in redox reactions typical of systems that contain lubricant additives would not be known or predictable given a knowledge of the performance of dinuclear molybdenum compounds in those systems.

U.S.-A4,846,983 generally describes compositions with cores containing metal and oxygen and optionally sulfur in which the core contains at least one, generally from 1 to 25, metal atoms, and the metal can be molybdenum. However, it does not describe synthesis of oxymolybdenum and oxosulfidomolybdenum compounds containing trinuclear molybdenum. Moreover, the synthetic conditions described therein are similar to those disclosed in patents and known in the art to make mononuclear and dinuclear molybdenum thiocarbamates.

The literature describes trinuclear molybdenum compounds but either in an ionic form or having ligands with short chain alkyl groups; see, e.g., Shibahara, Coord. Chem: Rev. 123, 73-148(1993). Such described compounds are consequently not oil-soluble, and they have not been described as lubricating oil additives.

### Summary of the Invention

In a first aspect, the invention is a lubricating oil composition comprising, or made by mixing, a major amount of an oil of lubricating viscosity and a minor amount of, as an additive, at least one compound comprising a trinuclear molybdenum core and bonded thereto ligands capable of rendering the compound oil-soluble or oil-dispersible. Preferably, the core contains non-metallic atoms consisting wholly or partly of sulfur and more preferably it consists of trinuclear molybdenum and sulfur. The additive may be in the form of mixtures of such compounds.

The lubricant compositions according to the first aspect of the invention have excellent antiwear, antioxidant, and friction-reducing properties; also they may be compatible with other additives used in formulating commercial lubricating compositions and can be made from readily available starting materials.

In a second aspect, the invention is an additive concentrate for blending with an oil of lubricating viscosity comprising, or made by mixing, an oleaginous carrier and from 1 to 200,000, for example 50 to 150,00 such as 50 to 100,000 ppm by weight of the molybdenum of an additive defined in the first aspect of the invention, based on the weight of the concentrate.

In a third aspect, the invention is a compound having the formula Mo₃SₖLₙQ_{z} wherein L represents independently selected ligands, n is from 1 to 4, k is at least 4, for example from 4 to 10, such as 4 to 7, Q is a neutral electron donating compound, and z ranges from 0 to 5, wherein the compound has a core having the structure 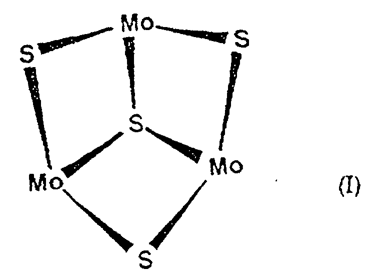 or

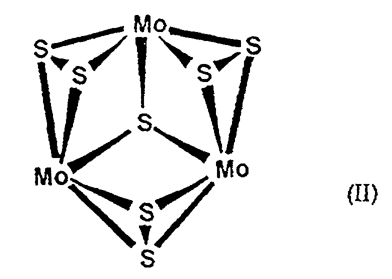

In a fourth aspect, the invention is a method of lubricating an internal combustion engine comprising operating the engine and lubricating the engine with a lubricating oil composition of the first aspect of the invention.

In a fifth aspect the invention is use of an additive as defined in the first aspect of the invention for enhancing one or more lubricating oil properties of a lubricating oil composition.

In a sixth aspect, the invention is a method for preparing a compound comprising a trinuclear thio molybdenum core and bonded thereto iigands capable of rendering the compound oil-soluble or oil-dispersible, which method comprises reacting a trinuclear molybdenum source, a source of said ligands, and a source of sulfur to react in a liquid medium to form said compound. The Mo source and the S source may be in the same source. The molybdenum source may, for example, be a compound containing the [Mo₃S₁₃]²⁻ ion or a trinuclear thiomolybdenum halide.

### Detailed Description of the Invention

### • OIL OF LUBRICATING COMPOSITION

This oil may be selected from vegetable, animal, mineral, or synthetic oils. The oils may range in viscosity from light distillate mineral oils to heavy lubricating oils such as gas engine oil, mineral lubricating oil, motor vehicle oil, and heavy duty diesel oil. The oils may be unrefined, refined, and re-refined. The oil may be used oil.

In general, the viscosity of the oil will range from 2 to 30 and especially in the range of 5 to 20, mm²·s⁻¹ at 100°C.

### • COMPOUNDS

The compounds may, for example, have the formula formula Mo₃SₖLₙ or mixtures thereof, wherein
L represents a ligand which is independent from other ligands represented by L when n is more than 1;
n is in the range from 1 to 4; and
k is at least 4, for example in the range from 4 to 10, such as 4 to 7, preferably 4 or 7.

Also, the compounds may have the formula Mo₃SₖEₓLₙ or mixtures thereof, wherein L and n are defined as above, k is at least 1, E is oxygen or selenium, x is at least 1, and the sum of k and x is at least 4.

The above formulae (Mo₃SₖLₙ and Mo₃Sₖ EₓLₙ) may each additionally include a moiety Q_{z} wherein Q represents a neutral electron-donating compound such as water, amines, alcohols, phosphines and ethers, and z is in the range from 0 to 5 and includes non-stoichiometric values.

The Mo₃Sₖ cores in the above formulae have a net charge of +4. Consequently, in order to neutralize such cores, the total charge among all ligands, L, in Mo₃SₖLₙ, must be -4. Four monoanionic ligands, L, are preferred. As indicated in the formulae, it is believed that oxygen and/or selenium may be substituted for sulfur in the core. However, in addition to the trinuclear molybdenum, the core should contain at least one, and preferably be primarily (i.e.. greater than 50%) sulfur. Most preferred is a core consisting of molybdenum and sulfur alone. The balance, if any, is oxygen and/or selenium.

When the core consists only of trinuclear molybdenum and sulfur it is represented by the formula Mo₃Sₖ, and with ligands attached is represented by the formula Mo₃SₖLₙ.

The electron-donating compound, Q_{z}, is merely present in the preceding formulae to fill any vacant coordination sites on the trinuclear molybdenum compound.

The ligands, including ligands L, may be independently selected from the group of:

-X―R,

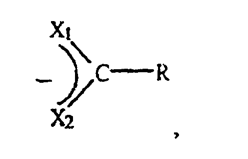

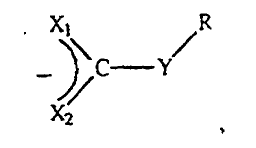

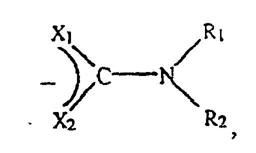

or 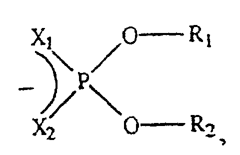 and mixtures thereof, and perthio derivatives thereof wherein X, X₁, X₂ and Y are independently selected from the group of oxygen and sulfur, and wherein R₁, R₂, and R are independently selected from the group consisting of H and organo groups that may be the same or different. Preferably the organo groups are hydrocarbyl groups such as alkyl (e.g., in which the carbon atom attached to the remainder of the ligand is primary, secondary or tertiary), aryl, substituted aryl and ether groups. More preferably, all ligands are the same.

Importantly, the organo groups of the ligands have a sufficient number of carbon atoms to render the compounds soluble or dispersible in the oil. The compounds' oil solubility or dispersibility may be influenced by the number of carbon atoms in the ligands. Preferably the ligand source chosen has a sufficient number of carbon atoms to render the compound soluble or dispersible in the oil. In the compounds in the present invention, the total number of carbon atoms present among all of the organo groups of the compounds' ligands typically will be at least 21, e.g. 21 to 800, such as at least 25, at least 30 or at least 35. For example, the number of carbon atoms in each alkyl group will generally range between 1 to 100, preferably 1 to 40 and more preferably between 3 and 20. Preferred ligands include dialkyldithiophosphate ("ddp"), xanthates, thioxanthates, dialkylphosphate, dialkyldithiocarbamate ("dtc"), and carboxylate and of these the dtc is more preferred.

Multidentate organic ligands containing at least two of the above functionalities are also capable of binding to at least one of the trinuclear cores and serving as ligands. Without wishing to be bound by any theory, it is believed that one or more trinuclear molybdenum cores may be bound or interconnected by means of at least one of these multidentate ligands. Such structures fall within the scope of this invention. This includes the case of a muitidentate ligand having multiple connections to one core.

Those skilled in the art will realise that formation of the compounds will require selection of appropriate ligands having suitable charge to balance the corresponding core's charge,

The term "hydrocarbyl" denotes a substituent having carbon atoms directly attached to the remainder of the ligand and is predominantly hydrocarbyl in character within the context of this invention. Such substituents include the following: (1) hydrocarbon substituents, that is, aliphatic (for example alkyl or alkenyl), alicyclic (for example cycloalkyl or cycloalkenyl) substituents, aromatic-, aliphatic-and alicyclic-substituted aromatic nuclei, as well as cyclic substituents wherein the ring is completed through another portion of the ligand (that is, any two indicated substituents may together form an alicyclic group); (2) substituted hydrocarbon substituents, that is, those containing non-hydrocarbon groups which, in the context of this invention, do not alter the predominantly hydrocarbyl character of the substituent. Those skilled in the art will be aware of suitable groups (e.g., halo, (especially chloro and fluoro), amino, alkoxyl, mercapto, alkylmercapto, nitro, nitroso, and sulfoxy); (3) hetero substituents, that is, substituents which, while predominantly hydrocarbon in character within the context of this invention, contain atoms other than carbon present in a chain or ring otherwise composed of carbon atoms.

Compounds having the formula Mo₃SₖLₙQ_{z} have cationic cores surrounded by anionic ligands that may be represented by structures (I) and (II) as depicted above.

Generally, the trinuclear molybdenum containing compounds can be prepared by reacting a suitable molybdenum source with a ligand source and, optionally, with a sulfur-abstracting agent. This may be carried out in a suitable liquid medium which may be aqueous or organic. Oil-soluble or -dispersible trinuclear molybdenum compounds can be prepared, for example, by reacting in the appropriate solvent(s) (M¹)₂Mo₃S₁₃ n(H₂O), wherein n varies between 0 and 2 and includes non-stoichiometric values, with a suitable ligand source such as a tetraalkylthiuram disulfide. Other oil-soluble or -dispersible trinuclear molybdenum compounds can be formed by reacting (M¹)₂Mo₃S₁₃ n(H₂O), wherein n varies between 0 and 2 and includes nonstoichiometric values, a ligand source such as tetraalkylthiuram disulfide, dialkyldithiocarbamate, or dialkyldithiophosphate, and a sulfur-abstracting agent such as cyanide ions, sulfite ions, or substituted phosphines. Altematively, a trinuclear molybdenum-sulfur halide salt such as [M']₂[Mo₃S₇A₆], wherein, A = Cl, Br, or I, may be reacted with a ligand source such as a dialkyldithiocarbamate or dialkyldithiophosphate in the appropriate solvent(s) to form an oil-soluble or oil-dispersible trinuclear molybdenum compound. In the above formulae, M¹ is a counter ion such as NH₄⁺. The trinuclear molybdenum compounds are related by the number of sulfur atoms in the molybdenum core. Within the disclosed range, the number of the sulfur atoms in the core may be altered by the addition of sulfur abstractors such as cyanide and substituted phosphines, or sulfur donators such as elemental sulfur and organic trisulfides to the trinuclear molybdenum compounds.

In general, the trinuclear molybdenum compounds can be purified by well known techniques such as chromatography; however, it may not be necessary to purify the compounds.

The lubricating oil compositions of the present invention may be prepared by adding to an oil of lubricating viscosity a mixture of an effective minor amount of at least one trinuclear molybdenum compound, which may be prepared in amounts as described previously, and, if necessary, one or more co-additives such as described hereinafter. This preparation may be accomplished by adding the trinuclear molybdenum compound directly to the oil or by first mixing the trinuclear molybdenum compound in a suitable carrier fluid to achieve oil solubility or dispersibility, and adding the mixture to the lubricating oil. Co-additives may be added to the oil by any method known to those skilled in the art, either prior to, contemporaneously with, or subsequent to addition of the trinuclear molybdenum compound.

The terms "oil-soluble" or "oil-dispersible" used herein do not necessarily indicate that the compounds or additives are soluble, dissolvable, miscible, or capable of being suspended in the oil in ail proportions. These do mean, however, that they are, for instance, soluble or stably dispersible in oil to an extent sufficient to exert their intended effect in the environment in which the oil is employed. Moreover, the additional incorporation of other additives may also permit incorporation of higher levels of a particular additive, if desired.
Concentrates of the trinuclear molybdenum compounds and co-additives, if required, in a suitable oleagenous, typically hydrocarbon, carrier fluid provide a convenient means of handling them before their use. Oils of lubricating viscosity, such as those described above as well as aliphatic, naphthenic, and aromatic hydrocarbons are examples of suitable carriers for concentrates. These concentrates may contain 1 to 90, preferably 1 to 70, more preferably 20 to 70, wt% of the additives based on the weight of the concentrate. Where a co-additive comprising at least one antioxidant additive as defined herein is used, the concentrate may contain 1 to 90, such as 1 to 50, wt % of additives based on the weight of the concentrate. Concentrates may comprise, or be made by mixing, the carrier fluid and additive(s).

The lubricating oil compositions made by combining an oil of lubricating viscosity containing at least one trinuclear molybdenum compound of the types and in the amounts described herein and optional co-additives may be used to lubricate mechanical engine components, particularly an intemal combustion engine, by adding the lubricating oil thereto.

The trinuclear molybdenum compounds of the present invention also possess antioxidant properties when used in a lubricating composition. Tests using the model compound cumene hydroperoxide in mineral oil basestock revealed that compounds having Mo₃Sₖ cores are more effective antioxidants than either conventional organic antioxidants or commercially available dinuclear molybdenum additive compounds such as dinuclear molybdenum alkylated dithiocarbamates.

The lubricating compositions and concentrates of this invention comprise defined components that may or may not remain the same chemically before and after mixing with an oleagenous carrier. This invention encompasses compositions and concentrates which comprise the defined components before mixing, or after mixing, or both before and after mixing.

### CO-ADDITIVES

Other known lubricant additives also may be used for blending in the lubricant composition of this invention. These include dispersants, detergents, e.g., single or mixed metal detergent systems, pour point depressants, viscosity improvers, antioxidants, surfactants, antiwear agents, and friction reducing agents. These can be combined in proportions known in the art. For example, additives containing phosphorus and/or sulfur compounds such as a zinc dialkyl dithio phosphate(ZDDP) can be prepared and used with the compounds of the present invention. However, the compounds of the present invention may be effective or may even possess improved properties when used in lubricating compositions that are free or substantially free of added phosphorus and/or sulfur. i.e., phosphorus and/or sulfur in addition to (i.e., except for) the phosphorus or sulfur contained in the trinuclear molybdenum compounds themselves. A lubricating composition that is substantially free of phosphorus and/or sulfur is one in which the amount of phosphorus and/or sulfur is not more than is inherently present in base oils of lubricating viscosity.

Particularly noteworthy is the use of anti-oxidants in combination with the trinuclear molybdenum compounds.

Examples of suitable antioxidants are selected from copper containing antioxidants, sulfur-containing antioxidants, aromatic amine containing antioxidants and phenolic antioxidants.
Examples of suitable copper-containing antioxidants include oil-soluble copper compounds described in EP-B-24 146, EP-A-280 579 and EP-A-280 580. Thus, for example, the copper may be blended into the oil as an oil-soluble copper salt of a synthetic or natural carboxylic acid. Examples of carboxylic acids from which suitable copper salts may be derived include C₂ to C₁₈ carboxylic acids (e g., acetic acid, and fatty acids such as stearic acid and palmitic acid), unsaturated acids (e.g., oleic acid), branched carboxylic acids (e.g., naphthenic acids of molecular weight of from 200 to 500, neodecanoic acid and 2-ethylhexanoic acid), and alkyl-or alkenyl-substituted dicarboxylic acids (e.g., polyalkenyl-substituted succinic acids such as octadecenyl succinic acids, dodecenyl succinic acids and polyisobutenyl succinic acids). In some cases, suitable compounds may be derived from an acid anhydride, for example, from a substituted succinic anhydride. The copper antioxidant may be, for example, a copper dithiocarbamate or copper dithiophosphate. Other copper and sulfur-containing antioxidant compounds, for example, copper mercaptides, xanthates, thioxanthates, are also suitable for use in accordance with the invention, as are copper sulfonates, phenates (optionally sutfurized) and acetylacetonates. Other copper compounds which may be used in accordance with the invention are overbased copper compounds. Examples of such compounds, and of processes for their preparation, are described in US-A-4,664,822 and EP-A-0 425 367. The copper compound may be in cuprous or cupric form.

Examples of suitable aromatic amine-containing antioxidants are aromatic amines which have at least one aromatic group directly attached to at least one amine nitrogen atom. Secondary aromatic amines, especially those having two aromatic groups attached to the same amine nitrogen atom, are preferred, but the use of other aromatic amines is not excluded. The amines may contain one or more aromatic groups, for example at least two aromatic groups. Where there are two aromatic groups, both are preferably bonded directly to the same amine nitrogen. Compounds in which two aromatic groups are linked by a covalent bond or by an atom or group (e.g., an oxygen or sulfur atom, or a -CO-, -SO₂- or alkylene group) may be used. Aromatic rings, which are preferably aromatic hydrocarbon rings, may be unsubstituted or substituted by one or more substituents selected from alkyl, cycloalkyl, alkoxy, aryloxy, acyl, acylamino, hydroxy, and nitro groups. Amines containing alkyl-substituted aromatic hydrocarbon rings are preferred, especially those containing two alkylsubstituted phenyl groups. Preferred N-aryl amines for use in accordance with the invention are naphthylamines and, especially, diphenylamines, including alkyl substituted diphenylamines, wherein the alkyl group may be the same or different, having I to 28 carbon atoms. Other nitrogen containing antioxidants, for example, phenothiazine type compounds, may also be used in this invention.

Examples of phenolic antioxidants include (a) sterically hindered tertiary-alkylated monohydric phenols such as those described in more detail in US-A-2,944,086; -3,043,775; and -3,211,652; and (b) methylene bridged tertiary alkyl polyphenols, such as 4,4'-methylene bis (2,6-di-tertbutylphenol) and 2,2'-methylene bis (4,6-di-(1,1,2-trimethylpropyl)phenol), and mixtures of (a) and (b) such as those described in more detait in EP-B-0456925.

Examples of sulfur-containing antioxidants (compounds) are alkaline earth metal salts of alkylphenolthioesters having preferably C5 to C12 alkyl side chains, calcium nonylphenol sulfide, ashless oil soluble phenates and sulfurized phenates, phosphosulfurized or sulfurized hydrocarbons, phosphorus esters and other sulfur-containing molybdenum containing compounds. Other examples of sulfur containing antioxidants are metal salts of dihydrocarbyl dithiophosphate or dihydrocarbyl dithiocarbamate compounds, wherein the metal is selected from Zn, Mn, Ni, Al, Group 1 metals and Group 2 metals. Other sulfur containing compounds include those described in EP-A-699 759, for example, sulfides of oils, fats or polyolefins, in which a sulfur group having two or more sulfur atoms is adjoined and bonded together in a molecular structure. Examples include sulfurized sperm oil, sulfurized pinene oil, sulfurized soybean oil, sulfurized polyolefin, sulfurized esters, dialkyl disulfide, dialkyl polysulfide, dibenzyl disulfide, ditertiary butyl disulfide, polyolefin polysulfide, thiadiazole type compound such as bis-alkyl polysulfide thiadiazole, and sulfurized phenol.

Preferable antioxidants are copper-containing antioxidants, aromatic amine containing compounds including diphenylamines and derivatives thereof that have an effect herein comparable to diphenylamines), and mixtures thereof. Examples of copper containing antioxidants include copper polyisobutylene succinic anhydride ("copper PIBSA") and copper oleate; diphenylamines include all effective derivatives of diphenylamines.

Thus, the lubricant compositions of the present invention may include a minor amount of at least one antioxidant and at least one oil-soluble or oil-dispersible trinuclear molybdenum compound. The lubricant composition may include a mixture of the trinuclear molybdenum compounds and antioxidants of the types disclosed herein, the lubricating oil and/or other additives disclosed herein per se, and/or of any intermediates and reaction products occurring as a result of the mixture. in combination, the antioxidants and trinuclear molybdenum compounds are present in a minor effective amount to produce the enhanced lubricating performance, particularly friction reduction, friction reduction retention, antioxidancy and/or antiwear properties in the oil.

The trinuclear molybdenum compounds disclosed herein in combination with the foregoing antioxidants produce an enhanced effect with respect to lubricating performance not evident in the presence of the trinuclear molybdenum compounds or antioxidants alone. Additionally, the enhanced effect of the trinuclear molybdenum compounds in the presence of these antioxidants would not be expected by one skilled in the art based on the performance of dinuclear molybdenum and copper additives due to the difference in oxidation state of the molybdenum in the trinuclear molybdenum compounds and dinuclear molybdenum compounds.

The admixture of antioxidants with the trinuclear molybdenum compounds allows reduction in molybdenum treat rates for effective friction reduction. The benefits are exemplified herein with bis-alkyldiphenyl amine ("DPA") and copper-polyisobutylene succinic anhydride, with copper-PIBSA demonstrating a stronger enhancement. Thus in the present invention, the combination of the trinuclear molybdenum compounds and the antioxidants demonstrates enhanced performance at reduced treat rates than dinuclear molybdenum additives such as Mo₂O₂S₂(dtc)₂. The enhanced performance of the combination of the trinuclear molybdenum compounds with these antioxidants typically can allow the use of the trinuclear molybdenum compounds at concentrations about two times lower than without the antioxidants.

Effective enhancement of lubricating performance, e.g., friction reduction (decreased friction coefficients), can be achieved according to the present invention. The lubricating compositions contain minor effective amounts, such as at least 1 ppm preferably ranging from I to 2000 ppm molybdenum from the trinuciear molybdenum compounds, such as 5 to 1000, preferably 20 to 1000, more preferably 5-750 ppm, and more preferably 10-300 ppm, all based on the weight of the lubricating composition. The amount of antioxidant additive is a minor effective amount, preferably from 0.001 to 10 wt% based on the weight of the finished oil, more preferably, from 0.01 to 2 wt% of the weight of the finished oil. Typically for copper containing antioxidants the amount is I to 1000 ppm of copper, such as 1 to 200 ppm copper, and for antioxidants, e.g., aromatic amine and sulfur containing, phenolic and ZDDP antioxidants containing antioxidants the preferred amount is up to 2 wt%. Within the above ranges, one skilled in the art can select the particular effective combinations of amounts to produce the enhancement in lubricating properties, particularly friction reducing and/or anti-wear, desired for the particular application. The selection within these ranges may be accomplished to optimize for either enhanced friction reducing or anti-wear performance or both.

Thus, the trinuclear molybdenum compounds allow for the use of a decreased amount of antioxidant or, alternatively, with an equal amount of antioxidant, they allow for the use of a decreased amount of trinuclear compound compared with the use of dinuclear molybdenum compounds, while still achieving-the desired enhanced lubricating, i.e., wear and/or friction, performance in the oil, thus making their use potentially more cost effective than current additives.

These benefits can be achieved in basestock as well as fully formulated lube oils. Essentially phosphorus- and/or sulfur-free oils also may also be treated.

### FURTHER TECHNICAL EFFECTS OF INVENTION

As is known in the art, lubricating oil compositions such as those containing dinuclear molybdenum sulfide additives lose their effectiveness over time when used in an engine. It is believed that one reason for this loss in effectiveness is that the lubricating oil is adversely affected by exposure to NOₓ compounds present in the engine's crankcase. Some attempts to cure this deficiency have focused on the incorporation of supplementary sulfur donors and antioxidants such as dibenzyldisulfide derivatives (DBDS). These attempts have not been completely successful.

The additives of the invention are effective in reducing friction at low concentration and remain effective even after use in an engine, are effective at low concentration, and retain their friction reduction properties even in the absence of supplementary sulfur sources or antioxidants.

Thus a further aspect the invention is a method for enhacing the friction reduction retention properties of a lubricating composition by adding to a major amount of oil of lubricating viscosity a minor amount of a compound of the first aspect of the invention.

These compounds were surprisingly found to enhance the lubricating properties of the compositions when used at concentrations of as low as 50 ppm molybdenum based on the total weight of the composition. This is a very large reduction in concentration compared with conventional dinuclear molybdenum sulfur additives. Those additives are typically used in concentrations ranging upwards from 500 ppm based on the total weight of the lubricating composition. Additionally, the conventional dinuclear additives require supplementary sulfur donor compounds in order to be as effective as the compounds of the present invention.

The compounds in the present invention were found to enhance the friction reduction and friction reduction retention properties of lubricating compositions. For example, lubricating compositions containing 150 ppm molybdenum as Mo₃S₇(dtc)₄ based on the weight of the lubricating composition were exposed to NO₂ treatment. By comparison, conventional dinuclear molybdenum sulfide lubricating oil additives were found to be less effective than the trinudear molybdenum compounds of this invention when the dinuclear compounds were used at a concentration of 150 ppm molybdenum, based on the weight of the composition, before and after exposure to NO₂. A lubricating composition's fuel economy and fuel economy retention properties are believed to be related to the composition's friction retention and friction reduction retention properties. Consequently, lubricating compositions containing trinuclear molybdenum compounds having the formula Mo₃S₇(dtc)₄. and mixtures thereof are believed to possess good fuel economy and fuel economy retention properties.

As is also known in the art, lubricating oil compositions containing molybdenum sulfide additives lose their friction reducing effectiveness over time when used in an intemal combustion engine. While an enhancement in friction reducing properties is observed when the compound is added to a fresh oil, little if any friction reduction is observed when Mo₂O₂S₂(dtc)₂ is added to a used oil in which a loss in friction reducing properties has occurred, depending on the degree of oil aging and degradation.

The invention provides a composition that is capable of enhancing and restoring the friction reducing effectiveness of lubricating oils.

Thus, in a still further aspect, the invention is a composition capable of improving the friction reduction properties of a used lubricating oil. The friction reduction properties of a used oil can be enhanced or restored by adding to a major amount of used oil of lubricating viscosity a minor amount of at least one compound as defined in the first aspect of the invention.

A minor amount.of at least one trinuclear molybdenum compound may be added to a fresh oil in order to enhance its effectiveness, particularly its friction reducing and wear reducing effectiveness.

The oils may range in viscosity from light distillate mineral oils to heavy lubricating oils such as gas engine oil, mineral lubricating oil, motor vehicle oil, and heavy duty diesel oil. A used lubricating oil is one that has been subjected to operating conditions such as to exposure to high shear forces, exposure to high temperature, exposure to a hostile chemical or physical environment, or similar conditions. The compounds of the present invention can also be used as additives in the formulation of fresh lubricating oil compositions. As such they possess superior friction reducing properties compared with dinuclear molybdenum sulfide additives that are known in the art. In cases where the compounds of the present invention are added to a used lubricating oil that are known in the art, the resulting friction reducing performance may exceed that of the originally formulated fresh oil.

### EXAMPLES

The invention will be more fully understood by reference to the following examples.

The procedures and equipment used for the Falex Block-On-Ring test were similar to those used in ASTM677-83 (Ranking Resistance of Materials to Sliding Wear Using Block-On-Ring Wear Test).

As used herein "AO" means antioxidant, "eh" means "ethylhexyl". SL300^{(TM)} and SL321^{(TM)} are commercial dinuclear molybdenum compounds available from Ashai Denka, Japan. MV-L^{(TM)} is Moly Van-L, a commercial dinuclear molybdenum compound available from Vanderbilt Chemical Company.

As used herein "coco" is an alkyl chain or mixture of chains of varying even numbers of carbon atoms of from typically C₈ to C₁₈, "dtc" means dialkyldithiocarbamate, and "ddp" means dialkyldithiophosphate.

### Example 1:

Synthesis of Mo₃S₄[(2-ethylhexyl)₂dtc]₄ by Abstraction of Sulfur with Sulfite in Water.

(NH₄)₂Mo₃ S₁₃.2H₂O (0.77 g,1 mmol) was added to a solution of potassium bis(2-ethylhexyl)dithiocarbamate (2.13 g, 6 mmol) in water (50 mL). In another flask, potassium sulfite (0.95 g, 6 mmol) was dissolved in water (50 ML). The solution of potassium sulfite was added dropwise to the molybdenum /dialkyldithiocarbamate mixture. The mixture was allowed to react for 24 hours at room temperature, and then extracted with ether and the ether solution filtered. The ether extract was distilled, the product extracted with methanol (3 x 30 mL)_{*x*} to afford the product which was dried under vacuum to yield Mo₃S₄[(2-ethylhexyl)₂dtc]₄ Synthesis of Mo₃S₄[(2-ethylhexyl)₂dtc]₄₋ by Abstraction of Sulfur with Cyanide in Water.

(NH₄)₂Mo₃ S₁₃.2H₂O (0.77 g, 1 mmol) was added to a solution of potassium bis(2-ethylhexyl)dithiocarbamate (2.13 g, 6 mmol) in water (50 mL). In another flask, potassium cyanide (0.39 g, 6 mmol) was dissolved in water (50 ML). The solution of potassium cyanide was added dropwise to the molybdenum/dialkyl-dithiocarbamate mixture. The mixture was allowed to react for 24 hours at room temperature, and then extracted with ether and the ether solution filtered. The ether extract was distilled, the residue extracted with methanol (3 x 30 mL), to afford the product which was dried under vacuum to yield Mo₃S₄[(2-ethylhexyl)₂dtc]₄.

### Example 3:

### Synthesis of Mo₃S₄[(2-ethylhexyl)₂dpp]₄₋ by Abstraction of Sulfur with Phosphine.

An acetonitrile (50 mL) solution containing (NH₄)₂Mo₃ S₁₃.2H₂O (0.77 g, 1.0 mmol) and PPh3 (1.57 g, 6.0 mmol) and bis(2-ethylhexyl)dithiophosphoric acid (2.34 9, 6.6 mmol) was refluxed for 24 hours and then cooled to room temperature. The acetonitrile was decanted off and the residue washed 2x with methanol (20 mL). The residue was dissolved in pentane and filtered; the pentane solution was concentrated by distillation and filtered again, and the remaining pentane removed to yield Mo₃S₄[(2-ethylhexyl)₂dpp]₄.

### Example 4:

### Synthesis of Mo₃S₄[(octyl)₂dtc]₄₋ by Abstraction of Sulfur with Cyanide using Thiuram Disulfide as Ligand Source

A methanol (50 mL) solution containing (NH₄)₂Mo₃ S₁₃.2H₂O (0.77 g, 1.0 mmol) and KCN (0.585 g, 9,0 mmol) and tetraoctyl thiuram disulfide (2.1 g, 3.3 mmol) was refluxed for 24 hours and then cooled to room temperature. The methanol was decanted off and the residue was washed 2x with ethanol (20 mL). The residue was dissolved in pentane and filtered, the pentane was evaporated to yield Mo₃S₄[(octyl)₂dtc]₄.

### Example 5:

### Synthesis of Mo₃S₇[(lauryl)₂ddp]₄.

To a solution of potassium dilauryldithiophosphate (2.2 g, 4.4 mmol) in methanol (100 mL) was added a solution of [NEt₄]₂Mo₃S₇. Cl₆ (0.98 9, 0.1 mmol) in acetonitrile (50 mL). The combined solution was heated at 60°C with stirring for 12 h. The solvents were decanted and the residue was washed with methanol followed by acetonitrile. The washed residue was dissolved in pentane and filtered. The pentane was evaporated to yield Mo₃S₇[(lauryl)₂ddp]₄.

### Example 6:

### Synthesis of Mo₃S₇[(2-ethylhexyl)₂dtc]₄.

A 1: 1 methanol/THF solution containing (NH₄)₂Mo₃ S₁₃.2H₂O (3.8 8 g, 5.0 mmol and tetra(2-ethylhexyl) thiuram disulfide (9.5 g, 15 mmol) was heated at 60°C for 24 hours and cooled to room temperature. The solution was filtered, the solvents evaporated, and the residue washed with methanol. The residue was dissolved in THF, the resulting solution filtered, and the THF removed by distillation to yield Mo₃S₇[(2-ethylhexyl)₂dtc]₄

The Mo₃SₖL₄ (k = 4-7) compounds are related by the number of sulfur atoms in the molybdenum-sulfur core. The number of the sulfur atoms in the core may be altered by the addition of sulfur abstractors such as cyanide and substituted phosphines or sulfur donators such as elemental sulfur and organic trisulfides to the Mo₃SₖL₄ compounds.

In Examples 7 to 10, the compounds of the invention were evaluated for friction and wear performance using a Falex block-on-ring tribometer. The data were obtained at a speed of 420 rpm, load of 100 kg (220 lb.), and a temperature of 100°C for 2h. Data reported include block wear scar volume, measured by profilometry, the end of test friction coefficient (Last Coef.), and the (Avg. Coef) friction coefficient over the 2 hour test. The end of the test friction coefficient is that obtained at the end of the test, and the average friction coefficient provides information on the activity of the added material, i.e., samples that attain the same decreased friction coefficients faster are considered to contain more active friction reducing compounds. In examples 7-10 the samples tested consisted of Solvent 150 Neutral (S150N) lubricating oil,1% ZDDP, and compounds of the present invention having 500 ppm molybdenum based on the total weight of the lubricating oil.

The procedures and equipment used in Examples 7 to 10 are similar to those used in ASTM Test G77-83 (Ranking Resistance of Materials to Sliding Wear Using Block-on-Ring Wear Test).

### Comparative Example 11

For comparative purposes, the Falex block-on-nng was conducted using only Solvent 150 Neutral (S15ON) and 1% ZDDP. The results are shown in Table I.

**TABLE I**

| Test Run | Compound | Wear (10⁻² mm³) | Last Coef. | Friction Avg. Coef |
|---|---|---|---|---|
| Ex. 7 | Mo₃S₄ [C₈H₁₇)₂)dtc]₄ | 1.69 | 0.041 | 0.057 |
| Ex. 8 | Mo₃S₄ [C₈H₁₇)₂dpp]₄ | 1.64 | 0.040 | 0.060 |
| Ex. 9 | Mo₃S₇ [(C₁₃H₂₇)dtc]₄ | 0.80 | 0.063 | 0.078 |
| Ex. 10 | Mo₃S₇ [(C₁₃H₂₇)₂dpp]₄ | 0.74 | 0.059 | 0.064 |
| Ex. 11 | None | 0.91 | 0.113 | 0.115 |

### Examples 12 to 15:

In these examples, the compounds of the invention were evaluated for friction and wear performance as described for Examples 7 to 10. In examples 12-15 the samples tested consisted of a 1OW30 fully formulated oil combined with compounds of the present invention having 500 ppm molybdenum based on the total weight of the lubricating oil.

### Comparative Example 16:

For comparative purposes, the Falex block-on-ring was conducted using a 1OW30 fully formulated motor oil. The results are shown in Table II.

**TABLE II**

| | | | Friction | |
|---|---|---|---|---|
| Test Run | Compound | Wear (10⁻²mm³) | Last Coef. | Avg. Coef |
| Ex. 12 | Mo₃S₄[(C₈H₁₇)₂dtc]₄ | 0.58 | 0.032 | 0.040 |
| Ex. 13 | Mo₃S₄[(C₈H₁₇)₂ddp]₄ | 0.58 | 0,029 | 0.038 |
| Ex. 14 | Mo₃S₄[(C₁₃H₂₇)₂dtc]₄ | 0.71 | 0.032 | 0.044 |
| Ex. 15 | Mo₃S₄[(C₁₃H₂₇)₂ddp]₄ | 0.62 | 0.035 | 0.044 |
| Ex. 16 | None | 2.86 | 0.132 | 0.130 |

### Examples 17-20:

Differential scanning calorimetry (DSC) tests were conducted on samples in Solvent 150 Neutral (SI5ON). with compounds of the present invention having 500 ppm molybdenum based on the total weight of the lubricating oil. In this DSC test, a sample of the oil is heated at a rate of e.g., 5°C /minute and the rise in sample temperature relative to an inert reference is measured. The temperature at which an exothermic reaction occurs or the oxidation onset temperature is a measure of the oxidative stability of the sample. It is believed that higher DSC temperatures indicate improved oxidative stability compared with compounds having lower DSC temperatures. The results of the tests are shown in Table III.

### Comparative Example 21:

The DSC test was performed with Solvent 150 Neutral (S 15ON) for comparative purposes. The results are shown in Table III.

**TABLE III**

| Test Run | Compound | DSC (°C) |
|---|---|---|
| Ex. 17 | Mo₃S₄[(C₈H₁₇)₂dtc]₄ | 285 |
| Ex. 18 | Mo₃S₄[(C₈H₁₇)₂ddp]₄ | 285 |
| Ex. 19 | Mo₃S₇[(C₁₃N₂₇)₂dtc]₄ | 268 |
| Ex. 20 | Mo₃S₇[(C₁₃H₂₇)₂ddp]₄ | 277 |
| Ex. 21 | None | 212 |

### Example 22:

The compounds of this invention were evaluated for their ability to decompose hydroperoxides. Hydroperoxides are known to engage in reactions that degrade the lubricant, consume additives, and cause viscosity increase, wear, and formation of sludge and deposits. In this test a compound in a base stock mixture (2.25:1 mixture of Solvent 150 Neutral (S 15ON) : Solvent 100 Neutral (S IOON) by weight) containing ZDDP is reacted with a known amount of cumene hydroperoxide (CHP). The CHP and the compound solution are reacted at a temperature of 125°C for one hour and the product is analyzed by gas chromatography linked with mass spectrometry (GC/MS). The amount of CHP consumed indicates how effective the compound is at neutralizing hydroperoxides, i.e., a higher amount indicates better antioxidancy. The elemental molybdenum concentration in the test solution was constant.

In compositions A and B the base stock contained a primary ZDDP and a trinuclear molybdenum compound. For comparison, composition C also contained a primary ZDDP and a commercial dinuclear molybdenum lubricant additive, Mo₂O₂S₂(dtc)₂ which has a mixture of octyl₂dtc and coco₂dtc ligands. In compositions D and E, the base stock contained a secondary ZDDP and a trinuclear molybdenum compound. For comparison, composition F contained a secondary ZDDP and Mo₂O₂S₂(dtc)₂.

**TABLE IV**

| Composition | Compound | Moles of CHP consumed per mole of compound | Moles of CHP consumed per mole of molybdenum |
|---|---|---|---|
| A | Mo₃S₄[(2-ethylhexyl)₂dtc]₄ | 8560 | 2853 |
| B | Mo₃S₇[(coco)₂dtc]₄ | 2442 | |
| C | Mo₂O₂S₂(dtc)₂ | 1120 | 560 |
| | | | |
| D | Mo₃S₄[(2-ethylhexyl)₂dtc]₄ | 7973 | 2658 |
| E | Mo₃S₇[(coco)₂dtc]₄ | 8473 | 2824 |
| F | Mo₂O₂S₂(dtc)₂ | 1174 | 587 |

Table IV shows that the trinuclear molybdenum compounds of the present invention decompose CHP approximately seven times better than the commercial dinuclear additive on a molecular basis in this test. On a normalized molybdenum mole basis, the novel trinuclear compounds perform four to five times better than the commercial dinuclear molybdenum additive in this test.

### Example 23.:

In this example, compounds of the present invention and a commercial additive were evaluated for friction and wear performance. The samples were run at a concentration of 500 ppm molybdenum in a sulfur-free synthetic basestock with added esters to increase the solubility of the molybdenum compounds in the synthetic lubricating oil.

Table V shows performance results for the trinuclear molybdenum compounds of the present invention versus a commercial molybdenum additive. A comparative example using an oil substantially free of sulfur and containing no added molybdenum compounds was not possible because the oil alone caused seizure during test start-up before the 220 lb. (100 kg) load was reached.

**TABLE V**

| Compound | Wear (10⁻²mm³) | Friction Last Coef. | Friction Avg. Coef |
|---|---|---|---|
| Mo₃S₇[(coco)₂dtc]₄ | 2.76 | 0.052 | 0.061 |
| Mo₂O₂S₂[(coco)₂dtc)₂ | 2.33 | 0.097 | 0.089 |

The trinuclear molybdenum dithiocarbamate compounds reduces friction in sulfur free basestocks more than the dinuclear molybdenum dithiocarbamate.

### Example 24:

In this example, the compounds of the invention and commercial additives were evaluated for friction and wear performance in a Falex block-on-ring test procedure. The data were acquired at a speed of 420 rpm, load of 220 lb. (1 00 kg), and a temperature of 100°C for 120 minutes. The samples were run at a concentration of 500 ppm molybdenum in a fully formulated motor oil without ZDDP (a common antiwear additive) and no additional phosphorus-containing compounds. Although some of the molybdenum compounds contain phosphorus, the molybdenum compounds were added at a lower treat rate than is typically used for ZDDP and contain less phosphorus by weight. Total phosphorus concentration in these oils was <0.02 %.

Trials 1 through 4 show performance results of samples of trinuclear molybdenum dithiocarbamates of the present invention and commercial dinuclear molybdenum dithiocarbamates; these test cases are phosphorus-free. Trials 5 to 7 exhibit the performance of the trinuclear molybdenum compounds of the present invention and a commercial dinuclear additive with dithiophosphate ligands. The samples in trials 5 to 7 are substantially free of phosphorous beyond that contained in the ligands. A lubricating composition that is substantially free of phosphorus is one in which the amount of phosphorus is no more than is inherently present in base oils of lubricating viscosity. For comparison purposes, trial 8 shows the performance of the fully formulated motor oil without ZDDP used as the lubricating oil in the test; this test case was phosphorus-free.

**TABLE VI**

| Trial | Compound | Wear (10⁻²mm³) | Friction Last Coef. | Friction Avg. Coef |
|---|---|---|---|---|
| 1 | Mo₃S₄[(octyl)₂dtc]₄ | 1.01 | 0.036 | 0.042 |
| 2 | Mo₃S₇[(coco)₂dtc]₄ | 0.92 | 0.033 | 0.042 |
| 3 | Mo₂O₂S₂[(octyl)₂dtc]₂ | 1.43 | 0.051 | 0.065 |
| 4 | Mo₂O₂S₂[(coco)₂dtc]₂ | 1.48 | 0.053 | 0.061 |
| 5 | Mo₃S₄[(octyl)₂ddp]₄ | 1.14 | 0.044 | 0.048 |
| 6 | Mo₃S₄[(lauryl)₂ddp]₄ | 1.29 | 0.064 | 0.058 |
| 7 | Mo₂O₂S₂[(octyl)₂ddp]₂ | 1.81 | 0.060 | 0.065 |
| 8 | None | 1.81 | 0.112 | 0.113 |

In the following examples 25 to 28, reference will be made to the following drawings where:
Figure 1 demonstrates the average friction coefficients obtained from 2 hour Falex block-on-ring testing of molybdenum compounds and molybdenum compounds in an oil formulated with or without antioxidants but without ZDDP. The y-axis is from 0.0 to 0.13.
Figure 2 shows comparative friction traces for a series of oils, with or without antioxidants.
Figure 3 shows friction traces comparing a dinuclear Mo compound with a trinuclear Mo compound, with or without antioxidants.
Figure 4 shows friction traces for 75 ppm Mo as Mo₃S₇[(coco)₂dtc]₄ in foul base oils.
Figure 5 shows friction traces for a dinuctear Mo compound, at 75 ppm Mo concentration in oils with or without antioxidants, and comparative friction traces of a trinuclear Mo compound with an antioxidant.

### EXAMPLE 25

The mixtures were prepared as follows:

The dinuclear molybdenum complex or trinuclear molybdenum-containing compound was placed with the appropriate equivalent of Cu(II) carboxylate (2.0 equivalents for Mo₂S₄(dtc)₂; 0.5, 1.0, and 1.5 equivalents for Mo₃S₄(dtc)₂ or Mo₃S₄(ddp)₂) in a flask and tetrahydrofuran ("THF') is added. After stirring for 24 hours the THF was evaporated off and the resulting mixture dissolved in S 15ON base oil that contained zinc dialkyl dithiophosphate ("ZDDP").
Alternatively, the examples indicated with an asterisk (*) were prepared by mixing the additives in S15ON containing ZDDP at temperatures up to 70°C for a period of time sufficient to dissolve the additives. The friction and wear results are detailed in Table VII below. The compositions formed by the foregoing methods using an Mo₃-containing starting material as a class possess UV and IR spectra characteristic of trinuclear molybdenum-containing compounds.

### Friction and wear testing,

Results of friction and wear tests using the combination of copper and trinuclear molybdenum compounds in S 15ON with 1% ZDDP are given in Table VII. For comparison purposes the results for the molybdenum in the form of Binuclear Mo₂S₄(coco₂dtc)₂, and trinuclear Mo₃S₄(octyl₂dtc)₂ or Mo₃S₄(2-ethylhexyl₂dtc)₂, Mo₃S₇(coco₂dtc)₂, Mo₃S₄(n-octyl₂ddp)₂ or Mo₃S₄(2-ethylhexyl₂ddp)₂, Mo₃S₇(lauryl₂ddp)₄, Cu(oleate)₂, and the copper in combination with certain dinuclear and trinucfear molybdenum compounds are listed. Friction and wear data were acquired using a Falex block-on-ring tribometer as described above.

**Table VII**

| Molybdenum at 500 ppm Mo | | | |
|---|---|---|---|
| Sample | Wear Volume (10⁻² mm³) | End Coefficient | Average Coefficient |
| (*) S150N + 1%ZDDP | 1.06 | 0.111 | 0.112 |
| | | | |
| S150N + 1% ZDDP with. | | | |
| (*) 55 ppm Cu as Cu(oleate)₂ | 0.46 | 0.108 | 0.108 |
| (*) 110 ppm Cu as Cu(oleate)₂ | 0.85 | 0.106 | 0 107 |
| (*) 165 ppm Cu as Cu(oleate)₂ | 1.03 | 0.107 | 0.107 |
| | | | |
| Mo₂S₄(coco₂dtc)₂ | 1.10 | 0.041 | 0.054 |
| Mo₂S₄(coco₂dtc)₂ + 331 ppm Cu as Cu(olcate)₂ | 0.54 | 0.041 | 0.048 |
| | | | |
| Mo₃S₄(octyl₂dtc)₄ | 1.69 | 0.041 | 0.057 |
| Mo₃S₄(octyl₂dtc)₄ + 55 ppm Cu as Cu(oleate)₂ | 1.27 | 0.038 | 0.048 |
| Mo₃S₄(octyl₂dtc)₄ + 110 ppm Cu as Cu(oleate)₂ | 0.64 | 0.038 | 0.047 |
| Mo₃S₄(octyl₂dtc)₄ + 165 ppm Cu as Cu(oleate)₂ | 0.53 | 0.039 | 0.048 |
| | | | |
| (*) Mo₃S₇(coco₂dtc)₄ | 0.62 | 0.044 | 0.058 |
| | | | |
| (*) Mo₃S₇(coco₂dtc)₄ +110 ppm Cu as Cu(oleate)₂ | 0.58 | 0.045 | 0.053 |
| | | | |
| Mo₃S₄(octyl₂ddp)₄ | 1.64 | 0.040 | 0.060 |
| Mo₃S₄(octyl₂ddp)₄ + 55 ppm Cu as Cu(oleate)₂ | 1.03 | 0.042 | 0.054 |
| Mo₃S₄(octyl₂ddp)₄ + 110 ppm Cu as Cu(oleate)₂ | 0.53 | 0.036 | 0.045 |
| Mo₃S₄(octyl₂ddp)₄ + 165 ppm Cu as Cu(oleate)₂ | 0.43 | 0.038 | 0.048 |
| | | | |
| (*)Mo₃S₇(lauryl₂ddp)₄ | 0.49 | 0.037 | 0.049 |
| (*)Mo₃S₇(lauryl₂ddp)₄+110 ppm Cu as Cu(oleate)₂ | 0.36 | 0.034 | 0.044 |

The wear and friction results indicated that a trinuclear molybdenum compound in combination with copper carboxylates had enhanced effect on anti-wear in S 15ON with ZDDP. The total wear was 50% less than S 15ON with ZDDP alone and up to 75% less than the trinuclear molybdenum compounds alone in S 15ON with ZDDP. The trinuclear molybdenum in combination with copper carboxylates also exhibited a tendency toward decreased friction. The examples given for the dinuclear molybdenum (Mo₂) complexes demonstrated that significantly more copper was required to obtain performance comparable to trinuclear molybdenum compounds used with lower copper concentrations. Thus, the addition of the trinuclear molybdenum compounds and copper (II) carboxylates to lubricating oils is demonstrated to enhance the lubricating properties of the oils.

### Example 26

To test the performance of trinuclear molybdenum compounds having dtc and ddp ligands in combination with antioxidants, bench tribometer testing was performed using a Falex Block-On-Ring tribometer. The molybdenum containing compounds were added at a concentration of 500 ppm Mo to an oil which was fully formulated but without ZDDP or supplemental antioxidants. The compounds were also tested in the same no-ZDDP formulation to which two antioxidants, bis-nonyl-diphenylamine (DPA) at 0.35 wt% and copper-polyisobutylene succinic anhydride at 0.4 wt%, yielding approximately 70 ppm copper, were added.

The formulations were tested in a Falex Block-on-Ring (BOR) tribometer as described below. Results are specified in Table VIII.

**Table VIII**

| | Without AO's | | | | With AO's | | |
|---|---|---|---|---|---|---|---|
| **Sample** | Wear Volume | End Friction Coefficient | Average Friction Coefficient | | Wear Volume | End Friction Coefficient | Average Friction Coefficient |
| No ZDDP Base | 1.02 | 0.110 | 0.110 | | 1.81 | 0.112 | 0.113 |
| | | | | | | | |
| Mo₂O₂S₂(coco₂dtc)₂ | 1.83 | 0.108 | 0.104 | | 1.48 | 0.053 | 0.061 |
| Mo₂O₂S₂(2-eh₂dtc)₂ | 1.72 | 0.094 | 0.088 | | 1.43 | 0.051 | 0.065 |
| | | | | | | | |
| Mo₃S₄(2-eh₂dtc)₄ | 1.21 | (3.040 | 0.050 | | 1.01 | 0.036 | 0.042 |
| Mo₃S₇(coco₂dtc)₄ | 0.91 | 0.039 | 0.074 | | 0.92 | 0.033 | 0.042 |
| | | | | | | | |
| Mo₂O₂S₂(2-eh₂ddp)₂ (SL-300) | 2.05 | 0.091 | 0.083 | | 1.81 | 0.060 | 0.065 |
| Mo₂O₂S₂(hexyl₂ddp)₂ (SL-321) | 1.30 | 0.104 | 0.098 | | 1.92 | 0.049 | 0.055 |
| Mo₂O₂S₂(2-eh₂ddp)₂ (MV-L) | 2.06 | 0.078 | 0.076 | | 1.81 | 0.051 | 0.058 |
| | | | | | | | |
| Mo₃S₄(octyl₂ddp)₄ | 1.12 | 0.071 | 0.060 | | 1.14 | 0.044 | 0.048 |
| Mo₃S₇(lauryl₂ddp)₄ | 1.42 | 0.106 | 0.092 | | 1.29 | 0.064 | 0.058 |

Figure I demonstrates the average friction coefficients obtained both without and with antioxidants in a no-ZDDP formulation.

The data demonstrate that the trinuclear molybdenum compounds with antioxidants provide enhanced performance, particularly as demonstrated by the average friction coefficients as compared to the dinuclear molybdenum complexes in the presence of antioxidants.

Samples are identified as
- a: No ZDDP Base Case Oil
- b: No ZDDP Base Case Oil + Antioxidants
- c: Mo₂O₂S₂(coco₂dtc)₂
- d: Mo₂O₂S₂(coco₂dtc)₂ + Antioxidants
- e: Mo₂O₂S₂(2-eh₂dtc)₂
- f: Mo₂O₂S₂(2-eh₂dtc)₂ + Antioxidants
- g: Mo₃S₄(2-eh₂dtc)₂
- h: Mo₃S₄(2-eh₂dtc)₂ + Antioxidants
- i: Mo₃S₇(coco₂dtc)₄
- j: Mo₃S₇(coco₂dtc)₄ + Antioxidants
- k: Mo₂O₂S₂(2-eh₂ddp)₂
- l: Mo₂O₂S₂(2-eh₂ddp)₂ + Antioxidants
- m: Mo₂O₂S₂(hexyl₂ddp)₂
- n: Mo₂O₂S₂(hexyl₂ddp)₂ + Antioxidants
- o: Mo₂O₂S₂(2-eh₂ddp)₂
- p: Mo₂O₂S₂(2-eh₂ddp)₂ + Antioxidants
- q: Mo₃S₄(octyl₂ddp)₄
- r: Mo₃S₄(octyl₂ddp)₄ + Antioxidants
- s: Mo₃S₇(lauryl₂ddp)₄
- t: Mo₃S₇(lauryl₂ddp)₄ + Antioxidants

### Example 27

The frictional properties of a set of oils (1-6), was determined. All of the oils were based on the same ZDDP-containing formulated oil, the "starting oil". Four of oils (1 to 4) contained Mo at a concentration of 150 ppm by weight provided by admixing the trinuclear Mo compound Mo₃S₄ ((2-ethylhexyl)₂dtc with the "starting oil", but differed in their respective contents of antioxidants. The remaining two oils (5 and 6) were both Mo-free but differed in their antoxidant content.

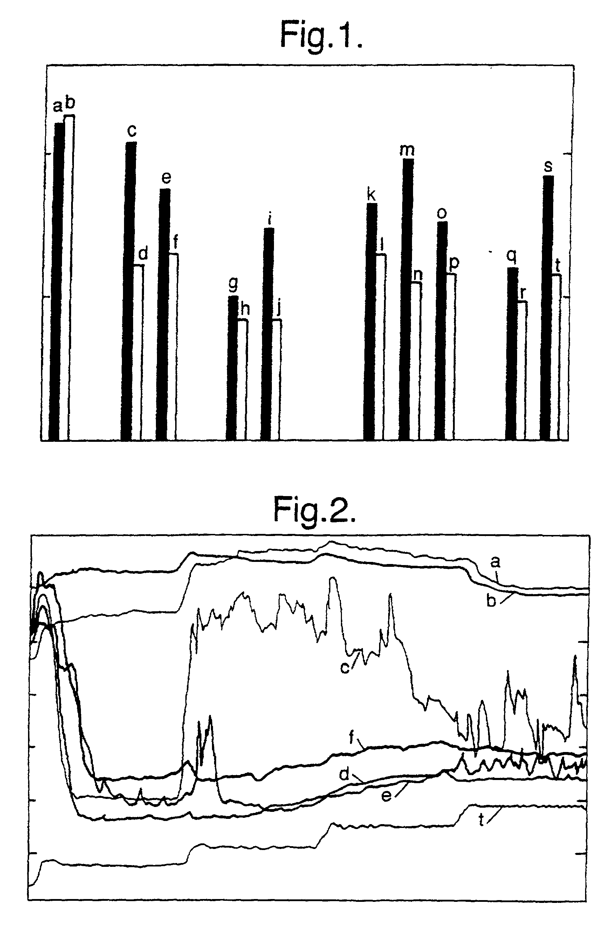

The results are shown firstly in Figure 2 as traces a, b, c, d, e and f, wherein the characteristics of Oils 1-6 and the identity of the trace corresponding to a particular oil are shown below: (Oils 7 and 8 are discussed below).

| Oil | Characteristics | Trace | Mo Compound |
|---|---|---|---|
| 1 | No dialkyldiphenylamine (DPA) | c | Trinuclear |
| | No Cu-polyisobutylene succinic anhydride (CuPIBSA) | | |
| | | | |
| 2 | DPA (0.35%) | d | Trinuclear |
| | | | |
| 3 | Cu PIBSA (0.40%) | e | Trinuclear |
| | | | |
| 4 | DPA (0.35%) | f | Trinuclear |
| | Cu PIBSA (0.40%) | | |
| 5 | No DPA; no Cu PIBSA | a | Mo-free |
| | | | |
| 6 | DPA (0.35%) and | b | Mo-free |
| | Cu PIBSA (0.40%) | | |
| | | | |
| 7 | No DPA; No Cu PIBSA | k | Dinuclear |
| | | | |
| 8 | DPA (0.35%); Cu PIBSA (0.40%) | I | Dinuclear |

Either with or without the specified antioxidants the friction coefficients are similar and vary between 0.12 and 0.14 throughout the temperature range tested for the Mo-free oils (Traces a and b in Figure 2).

At a molybdenum concentration of 150 ppm, enhancement in friction coefficients is observed for the combination of Mo₃S₄((2-ethylhexyl)2dtc)₄ with the antioxidants, used individually or together. (Traces c, d, e and f in Fig.2).

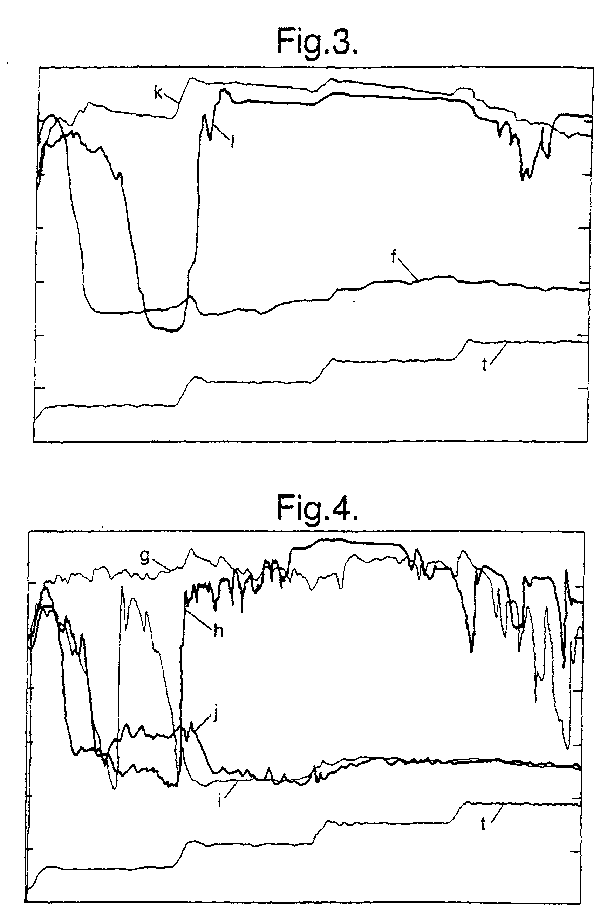

For further comparison purposes, Oils 7 and 8, (see above), based on the "starting oil" and containing a dinuclear Mo compound represented by Mo₂O₂S₂(coco₂dtc)₂ (MV822 from Vanderbilt Chemical Company) at 150 ppm Mo concentration were similarly tested. Their friction traces (k and I respectively) together with trace f are shown in Figure 3.

The data demonstrate the enhanced performance of the trinuclear molybdenum compounds with antioxidants in comparison with the dinuclear molybdenum compounds at a low concentration of 150 ppm of molybdenum.

### Example 28

The procedure of Example 27 was repeated using Mo₃S₇(coco₂dtc)₄ as the trinuclear Mo compound and at a concentration of 75 ppm of Mo, corresponding oils being identified as Oils 9-12.

The comparison dinuclear Mo compound was the same as that used in Example 27, but at a concentration of 75 ppm of Mo, corresponding oils being identified as Oils 13 and 14 respectively.

The results are shown firstly in Figure 4 as traces g, h, i and j, wherein the characteristics of Oils 9-14 and the identity of the trace corresponding to a particular oil are shown below:

| Oil | Characteristics | Trace | Mo Compound |
|---|---|---|---|
| 9 | No DPA | g | Trinuclear |
| | No Cu PIBSA | | |
| | | | |
| 10 | DPA (0.35%) | h | Trinuclear |
| | | | |
| 11 | Cu PIBSA (0.40%) | i | Trinuclear |
| | | | |
| 12 | DPA (0.35%) | j | Trinuclear |
| | and Cu PIBSA (0.40%) | | |
| | | | |
| 13 | No DPA; No Cu PIBSA | m | Dinuclear |
| | | | |
| 14 | DPA (0.35%); Cu PIBSA (0.40%) | n | Dinuclear |

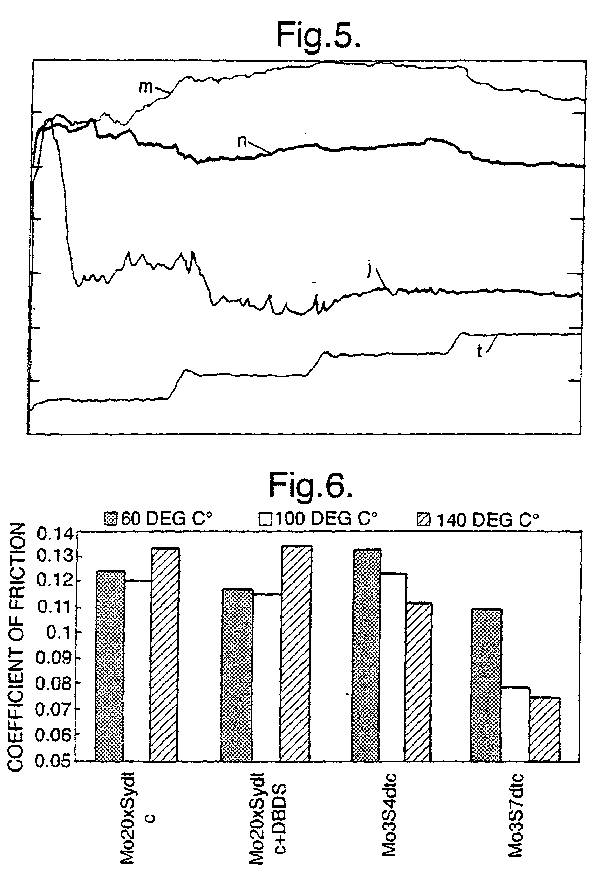

The comparison friction traces for oils containing the dinuclear Mo-containing compound are shown in Fig.5 as traces m and n, together with trace j.

The data demonstrate that at 75 ppm Mo, only minor frictional improvements over molybdenum-free oils are seen without antioxidants or with the co-addition of DPA whereas the use of Cu-PIBSA and the combination of Cu-PIBSA and DPA yielded enhanced friction coefficients at a concentration of the trinuclear molybdenum compounds corresponding to 75 ppm of Mo. They further demonstrate enhanced performance for trinuclear Mo compounds compared with dinuclear Mo compounds.

In Figures 2-5,
y axis = friction coefficient from 0 to 0.14
secondary y axis for temperature + degrees C from 0 to 500
x axis = time from 0 to 2 hours
and t is a representative temperature profile.

In the following examples 29 to 33, reference will be made to the accompanying drawings wherein:
Figure 6 shows the average coefficient of friction of fresh oils containing dinuclear and trinuclear molybdenum-sulfur compounds at a concentration of 150 ppm of Mo based on the weight of the oil.

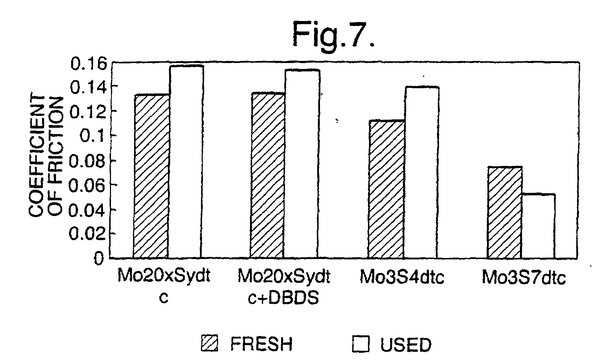

Figure 7 shows the average coefficient of friction at 140°C of oils containing molybdenum-sulfur additive at a concentration of 150 ppm before and after NO₂ treatment.

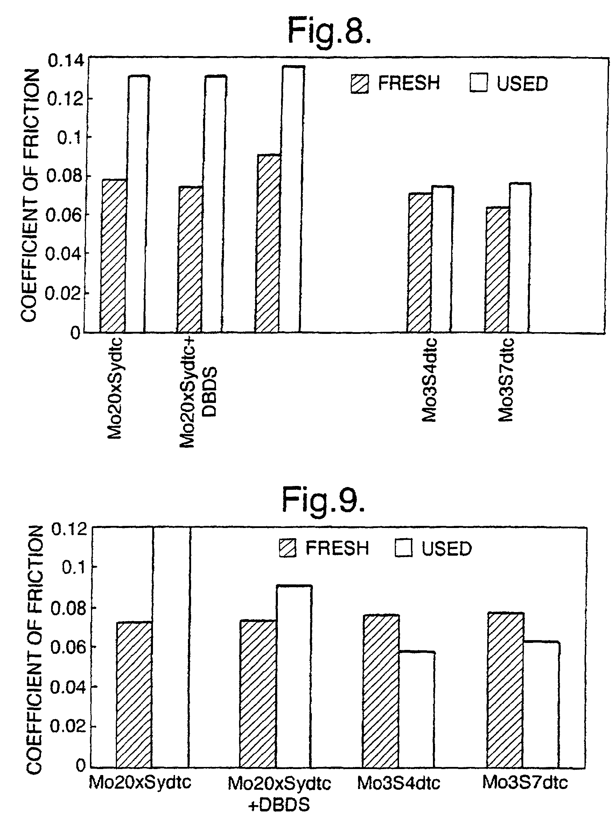

Figure 8 shows the average coefficient of friction at 100°C of oils containing molybdenum-sulfur compounds at a concentration of 500 ppm molybdenum before and after NO₂ treatment.

Figure 9 shows the average coefficient of friction at 100°C of oils containing molybdenum-sulfur compounds at a concentration of 750 ppm molybdenum before and after NO₂ treatment.

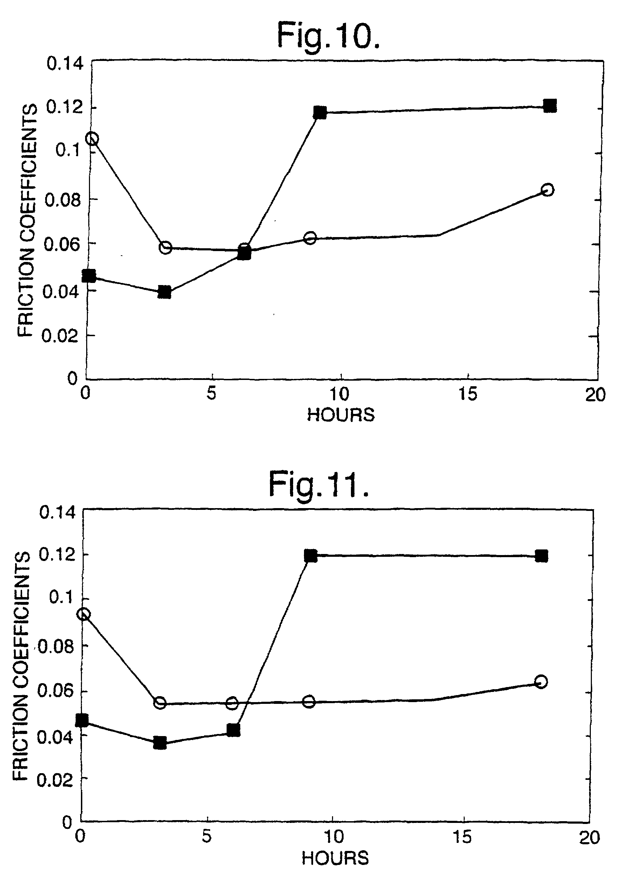

Figure 10 compares the coefficient of friction at 110°C of an oil containing a trinuclear molybdenum sulfur compound and a dinuclear molybdenum sulfur compound when both are subjected to NO₂ treatment.

Figure 11 compares the coefficient of friction at 135°C of an oil containing a trinuclear molybdenum sulfur compound and a dinuclear molybdenum sulfur compound when both are subjected to NO₂ treatment.

Fgure 12 shows the coefficient of friction and.wear for lubricating compositions containing molybdenum-sulfur compounds at different concentrations.

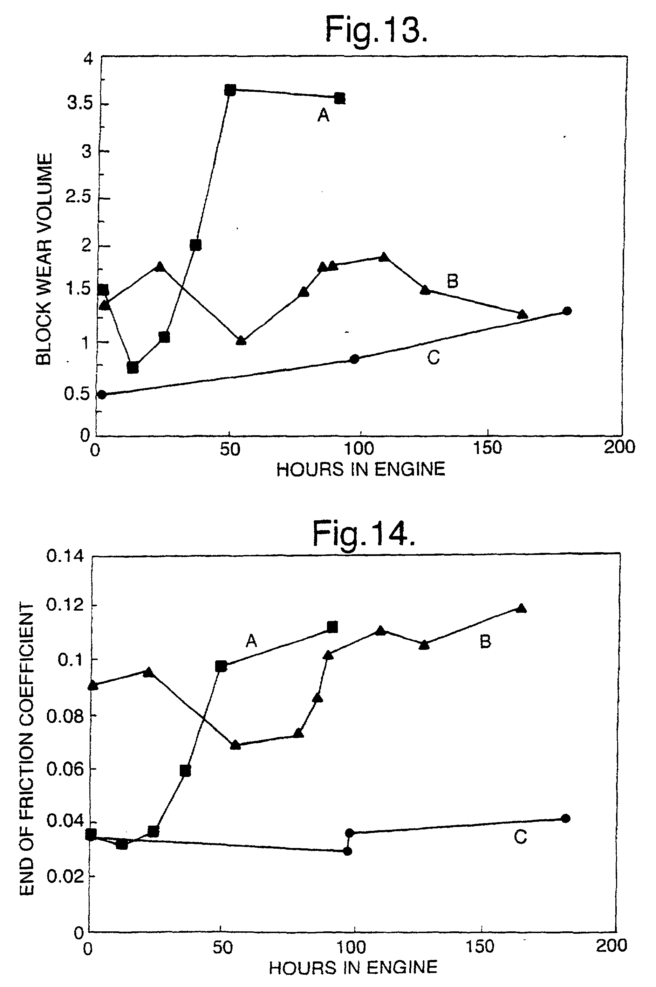

Figure 13 shows the wear volume and dinuclear and trinuclear molybdenum compounds during the Test.

Figure 14 shows the frictional coefficient of dinuclear and trinuclear molybdenum compounds during the Test.

### Example 29

In order to assess the retention of friction-reducing properties of the compounds of the present invention, the compounds were admixed into a fully formulated oil, their friction properties determined, then treated with NO₂ for a fixed period of time, and then finally, the friction properties determined again. Therefore, the degree of retention of friction-reducing properties is determined by measuring the friction properties of the test oil before (fresh) and after NO₂ treatment (used). A sample with good retention of friction-reducing properties will display minimal, if any, change in its friction properties before and after NO₂ treatment.

### Conditions for NO₂ Treatment

1.15g of a sludge precursor (150°C residual of heavy cat cracked naphtha) was added to a sample (130g), 1% NO₂ in air was bubbled through the resulting mixture at 130°C for 9 hours at a rate of 2.67 litres/hour.

The friction measurement of the NO₂ treated oil was determined the following day after NO₂ treatment.

### Conditions for Boundary Friction Measurement

The boundary friction measurements were determined on a high frequency reciprocating rig (HFRR) at three temperatures (60, 100 and 140°C) for 30 minutes at each temperature. The friction was measured using a 6mm steel ball in a reciprocating motion against a flat steel plate under a load of 4N, a stroke length of 1 mm, and a reciprocating frequency of 20Hz. The center line average surface roughness for the ball is about 0.01 µm. The coefficient of friction was sampled every 5 seconds and is quoted as an average friction over the 30 minute period. Fresh oil, disc and ball were used at each temperature.

Compositions with good friction reducing properties provide low coefficient of friction values, i.e., the lower coefficient of friction, the better the friction reducing property.

The friction coefficient at 100 and 140 deg. C are quoted since these temperatures are considered the most suitable in relating to the performance of molybdenum friction-reducing additives in the lubricating engine contacts.

This example demonstrates that lubricating compositions containing compounds having the formula Mo₃S₇(dtc)₄ or Mo₃S₄(dtc)₄ have superior boundary friction properties compared with lubricating compositions containing dinuclear molybdenum sulfur additives even when the dinuclear additives are used in the presence of supplemental sulfur sources such as DBDS at low molybdenum concentrations such as 150 ppm molybdenum based on the total weight of the composition. The "S₇" compounds are also shown to possess better boundary friction enhancement and retention properties than the "S₄" compounds; however, the trinuclear molybdenum compounds coordinated with four sulfur atoms possess enhanced boundary friction and friction retention properties in comparison with dinuclear molybdenum compounds.

Figure 6 and 7 show the superiority of the Mo₃S₇(dtc)₄ compounds in both boundary friction reduction and friction reduction retention when compared with three other formulated oils. Compounds represented by Mo₂OₓS_{y}dtc₂ Sakuralube 155™ and are supplied by Ashai Denka, Japan.

All four lubricating compositions contained 150 ppm of molybdenum as the indicated molybdenum sulfur additive. Additionally, the compositions contained 0.09 wt% phosphorous. The formulation details are summarized in Table IX.

Figure 6 shows that samples containing Mo₃S₇(dtc)₄ exhibit superior boundary friction between 60°C and 140°C. Figure 7 shows that the average coefficient of friction at 140°C remains low, even after exposure to 1% NO₂ in air treatment, for the sample containing Mo₃S₇(dtc)₄.

All four oils are fully formulated oils containing known lubricant additives, for example, dispersant, anti-wear agent, detergent, viscosity improvers, and anti-oxidants, in proportions known in the art.

### Example 30

This example shows that the trinuclear molybdenum sulfur compositions have superior friction reduction and friction reduction retention properties compared with conventional dinuclear molybdenum sulfide additives even when used at concentrations typically used for the dinuclear additives, for example 500 and 750 ppm of molybdenum. See Figures 8 and 9. Formulation details are provided in Table IX.

**Table IX**

| Mo-150ppm & P-0.09% | | | | |
|---|---|---|---|---|
| Oil Identification | Mo₂OₓS_{y}dtc | Mo₂OₓS_{y}dtc + DBDS | Mo₃S₄dtc | Mo₃S₇dtc |
| SAKURALUBE 155 | 0.36 | 0.36 | | |
| Mo₃S₄(dtc)₄ | | | 0.09 | |
| Mo₃S₇(dtc)₄ | | | | 0.12 |
| Dibenzyldisulfide | | 0.4 | | |

| Mo-500ppm & P-0.09% | | | | |
|---|---|---|---|---|
| Oil Identification | Mo₂OₓS_{y}dtc | Mo₂OₓS_{y}dtc + DBDS | Mo₃S₄dtc | Mo₃S₇dtc |
| SAKURALUBE 155 | 1.21 | 1.21 | | |
| Mo₃S₄(dtc)₄ | | | 0.31 | |
| Mo₃S₇(dtc)₄ | | | | 0.42 |
| Dibenzyldisulfide | | 0.4 | | |

| Mo-750ppm & P-0.09% | | | | |
|---|---|---|---|---|
| Oil Identification | Mo₂OₓS_{y}dtc | Mo₂OₓS_{y}dtc + DBDS | Mo₃S₄dtc | Mo₃S₇dtc |
| SAKURALUBE 155 | 1.82 | 1.82 | | |
| Mo₃S₄(dtc)₄ | | | 0.46 | |
| Mo₃S₇(dtc)₄ | | | | 0.63 |
| Dibenzyldisulfide | | 0.4 | | |

### Example 31 -

Resistance to performance loss due to NO₂. In order to simulate the loss of frictional benefits of molybdenum additives due to oil ageing in an engine, several formulated oils containing 500 ppm Mo as either MV822 or Mo₃S₇((coco)₂dtc)₄ were degraded via NO₂/air sparging at an elevated temperature. In this example, MV822™ is represented by Mo₂O₂S₂(dtc)₂, and is available from the Vanderbilt Chemical Company.

250 ml samples of the oils were held at 130°C with a sparge of 55 ml/min of 1% NO₂ in air for 18 hours with a periodic withdrawal of 20 ml. samples for friction testing.

The frictional performance of the sampled oils was determined using a Cameron-Plint TE77 tribometer. The test protocot uses a 6 mm steel ball in reciprocating motion against a flat steel plate under a normal load of 5 kg, a stroke length of 7 mm, and a reciprocation frequency of 22 Hz. During the test the oil is held for approximately 20 minutes at each of four temperatures 50°C, 80°C, 110°C, and 135°C while the friction coefficient is measured.

The friction coefficients measured at the end of the 110°C and 135°C temperature periods as a function of hours of NO₂ treatment are shown in figures 10 and 11 respectively. These temperatures are considered significant in relating to the performance of molybdenum friction reducing additives for automotive fuel economy.

It may be seen in figures 10 and 11 that the Mo₃S₇((coco)₂dtc)₄ (open squares) trinuclear molybdenum compound demonstrates far superior retention of its friction reduction performance under NO₂ oxidation than the dinuclear Mo₂O₂S₂(dtc)₂) additive (shaded squares).

### Example 32 - Performance at Low Concentrations

In order to compare the friction-reducing and anti-wear performance of trinuclear molybdenum compounds with conventional dinuciear molybdenum additives, a series of oils was bench friction and wear tested at various concentrations less than or equal to 500 ppm of Mo in a formulated automotive oil.

The formulations were tested in a Falex Block-on-Ring (BOR) tribometer at 100°C with a 220 lb. load, a speed of 420 rpm (44 radians/sec.) (0.77 m/s), and a 2 hour test length. Friction coefficients are reported as the end of run value. Data reported include the block wear scar volume, measured by profilometry and the end of test friction coefficient. The results are shown in Table X.

**Table.X**

| Concentration (ppm Mo) | Bock Wear Volume mm³ x 100 | Last Friction Coefficient |
|---|---|---|
| MV822-Mo₂O₂S₂(dtC)₂ | | |
| 0 ppm | 2.77 | 0.123 |
| 50 ppm | 2.45 | 0.105 |
| 75 ppm | | |
| 100 ppm | 1.80 | 0.094 |
| 150 ppm | 0.79 | 0.058 |
| 250 ppm | 0.61 | 0.032 |
| 500 ppm | 0.60 | 0.033 |
| Mo₃S₇((coco)₂dtc)₄ | | |
| 50 ppm | 1.31 | 0.091 |
| 75 ppm | 0.77 | 0.053 |
| 100 ppm | | |
| 150 ppm | 0.45 | 0.037 |
| 250 ppm | | |
| 500 ppm | 0.044 | 0.035 |

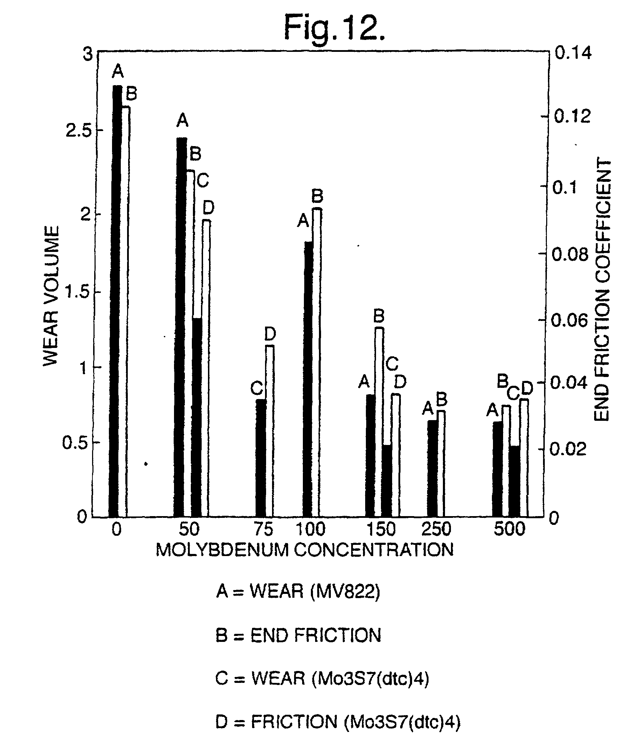

The results are also represented graphically in Figure 12.

It may be seen that the trinuclear Mo compound provides superior friction and wear performance at low concentrations.

### Example 33

In order to further test the retention properties of trinuclear Mo compounds and compare them with commercially available dinuclear additives a number of small engine aging runs were performed with periodic sampling and friction and wear performance measurement using a Falex Block-on-Ring tribometer. The compounds were tested in a fully formulated 10W-30 oil that did not contain supplemental antioxidants, i.e., ZDDP was present but Cu, diaryl amines and/or phenois were not included. Three molybdenum containing formulations were examined in his formulation according to the following test:

| Sample ID for Tables and Graphs | Mo Compound | Mo Concentration Based on the Wt. of the Composition |
|---|---|---|
| A | Mo₂O₂S₂(dtc)₄ | 500 |
| B | Mo₃S₇(coco₂dtc)₄ | 500 |
| C | Mo₃S₇(coco₂dtc)₄ | 50 |

The oils were aged in a 2 cylinder, water-cooled, 12 horse power Honda 'generator engine'. Incidentally, operating conditions were set similar to that of the Sequence III E/III F high temperature oxidation tests. The engine is a four stroke carburated overhead cam engine, and it is attached to a 6.5 kw electric generator. The engine was operated under steady state conditions at 3600 rpm, a sump temperature of 150°C, an air/fuel ratio of 16.5/1 and the power fixed at 4.8 kW. The fuel used was a blend of isooctane 90% and toluene 10%. Fuel consumption during the Test was approximately 3 pounds per hour.

A 2000 g initial lube charge was used with makeup oil being added continuously via a low flow peristaltic pump. Samples were removed every 12 hours for friction and wear measurements. The makeup oil addition is then the combination of the consumption rate (approx. 12g/hr) and the sample size (150g) for an average addition rate of approximately 25g per hour.

The fresh and a number of the withdrawn samples were tested in a Falex Block-on-Ring (BOR) tribometer at 100°C oil temperature, a 220 lb, load, a speed of 420 rpm (44 radians/sec.) (0.77 m/s), for 2 hours. Friction coefficients are reported as both the end of run value (end friction coefficient) and the average value (average friction coefficient) over the entire 2 hours. Following the testing, block wear volumes are determined by multiples and profilometry and are presented as mm³ x 100.

The procedures followed and equipment used in the Falex Block-on-Ring tests were similar to those in ASTM Test G77-83 (Ranking Resistance of Material to Slide Wear Using Block-on-Ring Wear Test).

The friction and wear test results for the three engine aging runs according to the test are shown in Table XI.

**Table XI**

| SAMPLE | Hours in engine | Wear Volume 10⁻²mm³ | End Friction Coefficient | Average Friction Coefficient |
|---|---|---|---|---|
| A Mo₂O₂S₂(dtc)₂ 500 ppm Mo | 0 | 1.55 | 0.036 | 0.052 |
| | 12 | 0.73 | 0.032 | 0.039 |
| | 24 | 1.03 | 0.037 | 0.043 |
| | 36 | 2.02 | 0.060 | 0.062 |
| | 48 | 3.64 | 0.098 | 0.094 |
| | 90 | 3.56 | 0.113 | 0.106 |
| | | | | |
| B Mo₃S₇((coco)₂d tc)₄ 500 ppm Mo | | | | |
| | 0 | 0.44 | 0.035 | 0.0407 |
| | | | | |
| | 99 | 0.80 | 0.031 | 0.036 |
| | 97 | 0.85 | 0.038 | 0.043 |
| | 180 | 1.32 | 0.044 | 0.050 |
| | | | | |
| C Mo₃S₇((coco)₂d tc)₄ 50 ppm Mo | | | | |
| | 0 | 1.39 | 0.091 | 0.091 |
| | | | | |
| | 22 | 1.81 | 0.097 | 0.099 |
| | 53 | 1.02 | 0.070 | 0.074 |
| | 77 | 1.57 | 0.074 | 0.080 |
| | 84 | 1.81 | 0.089 | 0.092 |
| | 88 | 1.82 | 0.104 | 0.102 |
| | 108 | 1.92 | 0.113 | 0.112 |
| | 124 | 1.57 | 0.108 | 0.110 |
| | 163 | 1.31 | 0.122 | 0.121 |

Figures 13 and 14 show that the trinuclear Mo compounds provided superior performance retention compared with commercial dinuclear Mo additive when tested at equal (500 ppm Mo) concentrations. Even at 50 ppm Mo, the trinuclear compound tested provided significant anti-wear performance retention and a degree of friction benefit and performance retention.

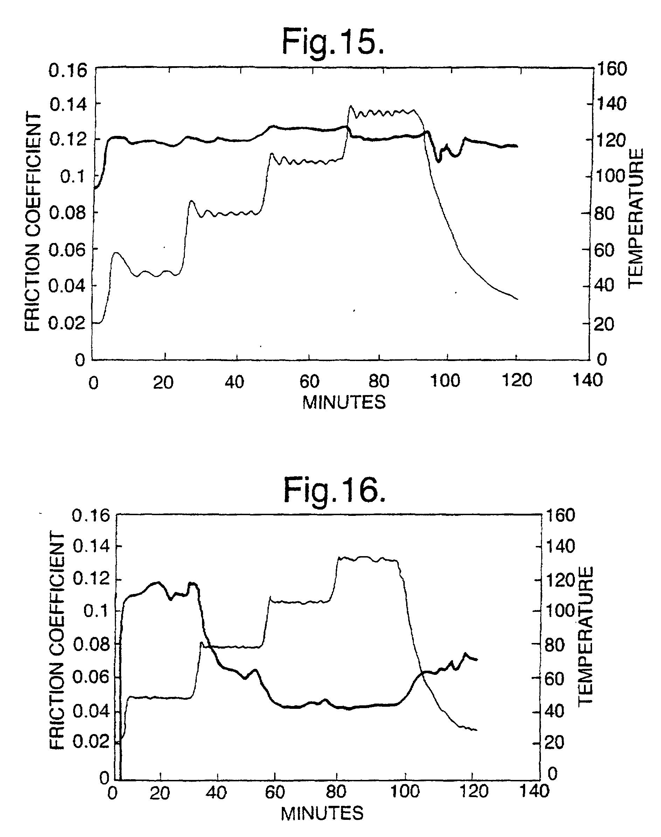

In the following Example 34 and Comparative Example 35, reference is to be made to accompanying drawings wherein Figure 15 shows the results of frictional performance measurements (heavy trace) of an oil containing a commercial dinuclear molybdenum additive over time. The oil's temperature was varied during the test, temperature being depicted in the fine trace.

Figure 16 shows the results of frictional performance measurements (heavy trace) of an oil containing a compound having the formula Mo₃S₄(2-ethylhexyl₂dtc)₄. The oil's temperature was varied during the test; temperature is depicted in the fine trace.

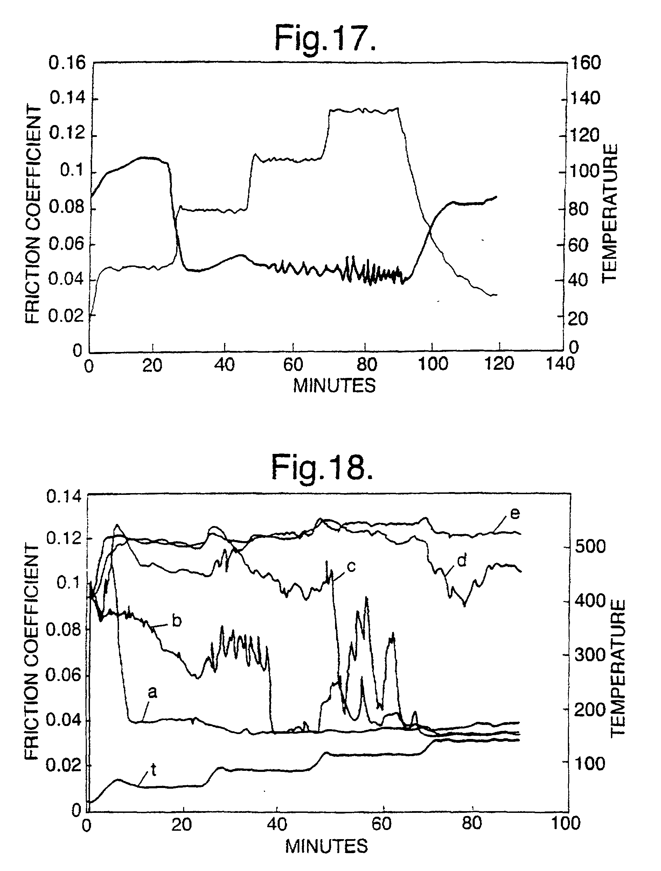

Figure 17 shows the results of frictional performance measurements (heavy trace) of an oil containing a compound having the formula Mo₃S₇((coco)₂dtc)₄. The oil's temperature was varied during the test; temperature is depicted in the fine trace.

Figure 18 shows the frictional performance of 5 lubricating compositions. Prior to the start of the measurement, four samples of lubricating oil were aged for a period of time under operating conditions. One sample was not aged. At the conclusion of ageing, a commercial dinuclear molybdenum compound was added to the oil. The temperatures of each admixture were varied in time (trace T), and frictional performance was measured for the oil that was not aged (trace a), aged 12 hours (trace b), aged 23 hours (trace c), aged 36 hours (trace d), and aged 72 hours (trace e).

### Example 34

In order to test the effectiveness of friction reduction by the addition of molybdenum containing compounds to used engine lubricants, a dimeric molybdenum additive (Mo₂O₂S₂(dtc)₂), and several trimeric molybdenum compounds Mo₃S₄(2-ethylhexyl₂ dtc)₄ and Mo₃S₇((coco)₂dtc)₄ were added at a concentration of 500 ppm molybdenum to a non-molybdenum containing oil which was aged in a Honda generator engine for 72 hours under conditions which simulate a Sequence IIIE engine test.

Ageing was conducted in a 2 cylinder, carburated, four stroke, water-cooled, 12 horsepower, Honda "generator engine". The engine was attached to a 6.5 kw electric generator during the test.

The engine was operated under steady state conditions at 3,600 rpm, a sump temperature of 150'C, an air/fuel ratio of 16.5/1 and a fixed power output of 4.8 kW.

The frictional performance of the aged oil treated with the various molybdenum additives was determined using a Cameron-Plint TE77 tribometer. The test protocol used a 6 mm. steel ball in reciprocating motion against a flat steel plate under a normal load of 5 kg., a stroke length of 7 mm., and a reciprocation frequency of 22 Hz. During the test the oil is held for approximately 20 minutes at each of four temperatures 50, 80, 110, and 135°C while the friction coefficient is measured.

From the friction trace in Figure 15, it may be clearly seen that the commercial dinuclear molybdenum additive Mo₂O₂S₂(dtc)₂ does not impart the expected low friction coefficients, generally <0.06 at temperatures over 100°C for a fully effective molybdenum additive, to the oil. On the other hand, Figures 16 and 17 show that the trinuclear molybdenum compounds, Mo₃S₄(2-ethylhexyl₂dtc)₄ (Figure 16) and Mo₃S₇((coco)₂dtc)₄ (Figure 17), give very low friction coefficients between 0.04 and 0.05 at the higher test temperatures.

### Comparative Example 35

The friction-reducing properties of commercial dinuclear molybdenum additives were also investigated for comparison with the compounds in the present invention. Fresh oil of lubricating viscosity was used in an internal combustion engine under operating conditions for various times to form a used lubricating oil. A dinuclear molybdenum additive having the formula Mo₂O₂S₂(dtc)₂ was then combined with the used lubricating oil at 500 ppm Mo. The frictional performance of the additive was then determined according to the method of Example 34.

Figure 18 shows the results of those tests. The different traces show the performance of mixtures of the dinuclear molybdenum additive with lubricating oils aged for progressively longer times. Trace (a) is a fresh oil, trace (b) is aged 12 hours, trace (c) is aged 23 hours, trace (d) is 36 hours, and trace (e) is aged 72 hours. Trace (T) shows the variation of temperature with time during the performance test.

Figure18 reveals that, while some improvement in friction reducing performance is obtained when the dinuclear molybdenum additive is combined with a fresh oil, that benefit gradually diminishes when that additive is combined with lubricating oils that have been aged under operating conditions. In these examples, no benefit is obtained when the commercial additive is combined with oils that have aged 72 hours or longer. By comparison, Example 34 shows that a benefit is obtained when combining lubricating oils that have been aged for 72 hours with the trinuclear molybdenum compounds of the present invention.

## Claims

1. A lubricating oil composition comprising, or made by mixing, a major amount of an oil of lubricating viscosity and a minor amount of, as an additive, at least one compound comprising a trinuclear molybdenum core and bonded thereto ligands capable of rendering the compound oil-soluble or oil-dispersible.

2. The composition of claim 1 wherein the core contains non-metallic atoms consisting wholly or partly of sulfur.

3. The composition of claim 1 or claim 2 wherein the core consists of trinuclear molybdenum and sulfur.

4. The composition of any of the preceding claims wherein the compound has the formula Mo₃SₖLₙ or mixtures thereof, wherein
L represents a ligand which is independent from other ligands represented by L when n is more than 1;
n is in the range from 1 to 4; and
k is at least 4, for example in the range from 4 to 10, such as 4 to 7.

5. The composition of claim 1 or claim 2 wherein the compound has the formula Mo₃SₖEₓLₙ or mixtures thereof, wherein L and n are defined as in claim 4, k is at least 1, E is oxygen or selenium, x is at least 1, and the sum of k and x is at least 4.

6. The composition of claim 4 or claim 5 wherein the formula additionally includes a moiety Q_{z}, wherein Q represents a neutral electron-donating compound, and z is in the range from 0 to 5 and includes non-stoichiometric values.

7. The composition of any of the preceding claims wherein the ligands or ligands L, are represented by one or more of the structures having the formula
―X―R, 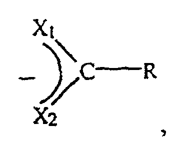 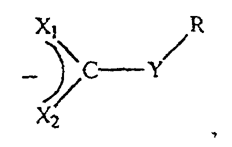 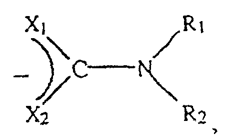
or 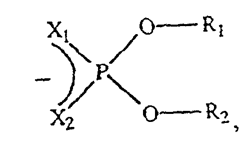 and mixtures thereof, and perthio derivatives thereof wherein X, X₁, X₂ and Y are independently selected from the group of oxygen and sulfur, and wherein R₁, R₂, and R are independently selected from the group consisting of H and organo groups that may be the same or different.

8. The composition of claim 7 wherein the organo groups independently represent alkyl, substituted or unsubstituted aryl, or ether groups.

9. The composition of claim 8 wherein the groups are alkyl groups each having from 1 to 100, for example 1 to 40, such as 3 to 20, carbon atoms.

10. The composition of any of the preceding claims wherein the ligands are or L independently represents a dialkyldithiophosphate, thioxanthate, dialkylphosphate, dialkyldithiocarbamate, xanthate, or carboxylate ligand.

11. The composition of any of the preceding claims wherein the weight of molybdenum from the trinuclear molybdenum compound is at least 1, for example 1 to 2000, such as 5 to 1000, preferably 20 to 1000, ppm based on the weight of the composition.

12. The composition of any of the preceding claims wherein the total number of carbon atoms is all of the ligands' or all L's organo groups is at least 21, such as 21 to 800.

13. The composition of any of the preceding claims wherein the oil of lubricating viscosity is substantially free of sulphur.

14. The composition of any of the preceding claims further comprising, or made by mixing, at least one antioxidant additive.

15. The composition of claim 14 wherein the antioxidant is a copper-containing antioxidant, a sulfur-containing antioxidant, a phenolic antioxidant, an aromatic amine-containing antioxidant or mixtures thereof.

16. The composition of any of the preceding claims further comprising one or more dispersants, detergents, pour point depressants, viscosity modifiers, surfactants and antiwear agents.

17. An additive concentrate for blending with an oil of lubricating viscosity comprising, or made by mixing, an oleaginous carríer and from 1 to 200,000 ppm by weight, for example 50 to 150,000 such as 50 to 100,000, of the molybdenum of an additive as defined in any of claims 1 to 12, based on the weight of the concentrate.

18. An additive concentrate of claim 17 further comprising, or made by mixing, at least one antioxidant additive as defined in claim 14 or claim 15, whereby the concentrate contains from 1 to 90 weight per cent, such as 1 to 50, of additives based on the weight of the concentrate.

19. A compound having the formula Mo₃SₖLₙQ_{z} wherein L represents independently a ligand as defined in claim 7; n is from 1 to 4, k is at least 4, for example from 4 to 10, such as 4 to 7; Q is a neutral electron donating compound, and z ranges from 0 to 5, wherein the compound has a core having the structure 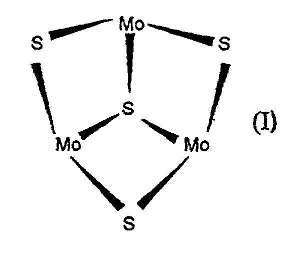 or

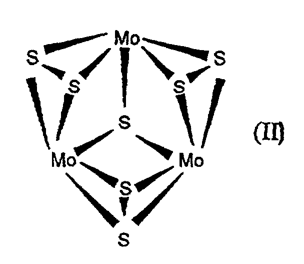

20. A compound of claim 19 wherein L represents independently a dialkyldithio-phosphate, thioxanthate, dialkyl-phosphate, dialkyldithiocarbamate, xanthate, or carboxylate ligand.

21. A method of lubricating an internal combustion engine comprising operating the engine and lubricating the engine with a lubricating oil composition as claimed in any of claims 1 to 16.

22. The use of an additive or additives as defined in any of claims 1 to 16, for enhancing one or more lubricating properties of a lubricating oil composition.

23. A method for preparing a compound comprising a trinuclear thiomolybdenum core and bonded thereto ligands capable of rendering the compound oil-soluble or oil-dispersible, which method comprises reacting, in a liquid medium, a trinuclear molybdenum source with a source of said ligands and a source of sulfur to form said compound.

24. The method of claim 23 wherein the molybdenum source and the source of sulfur is a compound containing the [Mo₃S₁₃]²⁻ ion or a trinuclear thiomolybdenum halide.

25. A method of claim 23 or claim 24 wherein the ligands are dialkyldithiophosphate, thioxanthate, dialkylphosphate, dialkyldithiocarbamate, xanthate, or carboxylate.

## Patentansprüche

1. Schmierölzusammensetzung, die eine größere Menge öl mit Schmierviskosität und als Additiv eine geringere Menge von mindestens einer Verbindung, die einen dreikernigen Molybdänkern umfasst, an den Liganden gebunden sind, die in der Lage sind, die Verbindung öllöslich oder öldispergierbar zu machen, umfasst oder durch Mischen derselben hergestellt ist.

2. Zusammensetzung nach Anspruch 1, bei der der Kern nicht-metallische Atome enthält, die gänzlich oder teilweise aus Schwefel bestehen.

3. Zusammensetzung nach Anspruch 1 oder Anspruch 2, bei der der Kern aus dreikernigem Molybdän und Schwefel besteht.

4. Zusammensetzung nach einem der vorhergehenden Ansprüche, bei der die Verbindung die Formel Mo₃SₖLₙ oder Mischungen derselben hat, wobei
L einen Liganden wiedergibt, der von anderen durch L wiedergegebenen Liganden unabhängig ist, wenn n mehr als 1 ist,
n im Bereich von 1 bis 4 liegt und
k mindestens 4 beträgt, beispielsweise im Bereich von 4 bis 10, wie 4 bis 7 liegt.

5. Zusammensetzung nach Anspruch 1 oder Anspruch 2, bei der die Verbindung die Formel Mo₃SₖEₓLₙ oder Mischungen derselben hat, wobei L und n der Definition in Anspruch 4 entsprechen, k mindestens 1 ist, E Sauerstoff oder Selen ist, x mindestens 1 ist und die Summe aus k und x mindestens 4 beträgt.

6. Zusammensetzung nach Anspruch 4 oder Anspruch 5, bei der die Formel zusätzlich eine Komponente Q_{z} einschließt, wobei Q eine neutrale Elektronendonorverbindung wiedergibt und z im Bereich von 0 bis 5 liegt und nicht-stöchiometrische Werte einschließt.

7. Zusammensetzung nach einem der vorhergehenden Ansprüche, bei der die Ligaeden oder Ligaeden L durch eine oder mehrere der Strukturen mit der Formel
―X―R, 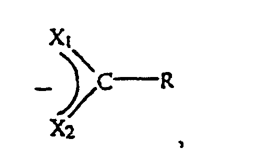 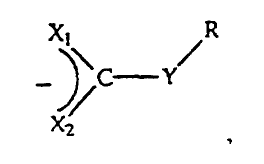 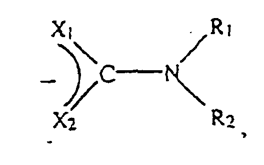
oder 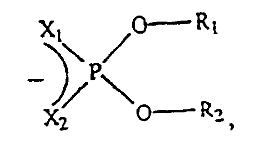 und Mischungen derselben und Perthioderivate derselben wiedergegeben werden, wobei X, X₁, X₂ und Y unabhängig ausgewählt sind aus der Gruppe aus Sauerstoff und Schwefel und wobei R₁, R₂ und R unabhängig ausgewählt sind aus der Gruppe bestehend aus H und Organogruppen, die gleich oder verschieden sein können.

8. Zusammensetzung nach Anspruch 7, bei der die Organogruppen unabhängig Alkyl, substituiertes oder unsubstituiertes Aryl oder Ethergruppen wiedergeben.

9. Zusammensetzung nach Anspruch 8, bei der die Gruppen Alkylgruppen mit jeweils 1 bis 100, beispielsweise 1 bis 40 wie 3 bis 20 Kohlenstoffatomen sind.

10. Zusammensetzung nach einem der vorhergehenden Ansprüche, bei der die Ligaeden oder L unabhängig ein Dialkyldithiophosphat-, Thioxanthat-, Dialkylphosphat-, Dialkyldithiocarbamat-, Xanthat- oder Carboxylatligand sind beziehungsweise diese bedeuten.

11. Zusammensetzung nach einem der vorhergehenden Ansprüche, bei der das Gewicht des Molybdäns der dreikernigen Molybdänverbindung, bezogen auf das Gewicht der Zusammensetzung, mindestens 1, beispielsweise 1 bis 2000 wie 5 bis 1000, vorzugsweise 20 bis 1000 ppm ist.

12. Zusammensetzung nach einem der vorhergehenden Ansprüche, bei der die Gesamtzahl der Kohlenstoffatome in den Organogruppen aller Liganden oder aller L mindestens 21 beträgt, wie 21 bis 800.

13. Zusammensetzung nach einem der vorhergehenden Ansprüche, bei der das Öl mit Schmierviskosität im Wesentlichen frei von Schwefel ist.

14. Zusammensetzung nach einem der vorhergehenden Ansprüche, die ferner mindestens ein Antioxidansadditiv umfasst oder durch Mischen mit einem solchen hergestellt ist.

15. Zusammensetzung nach Anspruch 14, bei der das Antioxidans ein kupferhaltiges Antioxidans, ein schwefelhaltiges Antioxidans, ein phenolisches Antioxidans, ein aromatisches Amin enthaltendes Antioxidans oder Mischungen derselben ist.

16. Zusammensetzung nach einem der vorhergehenden Ansprüche, die ferner ein oder mehrere Dispergiermittel, Detergentien, Stockpunktsenkungsmittel, Viskositätsmodifizierungsmittel, Tenside und Antiverschleißmittel umfasst.

17. Additivkonzentrat zum Mischen mit einem Öl mit Schmierviskosität, das einen öligen Träger und 1 bis 200 000 Gew.ppm, beispielsweise 50 bis 150 000 Gew.ppm wie 50 bis 100 000 Gew.ppm des Molybdäns von einem Additiv gemäß der Definition in einem der Ansprüche 1 bis 12, bezogen auf das Gewicht des Konzentrats, umfasst oder durch Mischen derselben hergestellt ist.

18. Additivkonzentrat nach Anspruch 17, das ferner mindestens ein Antioxidansadditiv gemäß der Definition in Anspruch 14 oder Anspruch 15 umfasst oder durch Mischen mit demselben hergestellt ist, wodurch das Konzentrat, bezogen auf sein Gewicht, 1 bis 90 Gew.% wie 1 bis 50 Gew.% Additive enthält.

19. Verbindung mit der Formel Mo₃SₖLₙQ_{z}, bei der L unabhängig einen Liganden gemäß der Definition in Anspruch 7 wiedergibt, n 1 bis 4 beträgt, k mindestens 4 ist, beispielsweise 4 bis 10 wie 4 bis 7, Q eine neutrale Elektronendonorverbindung ist und z im Bereich von 0 bis 5 liegt, wobei die Verbindung einen Kern mit der Struktur 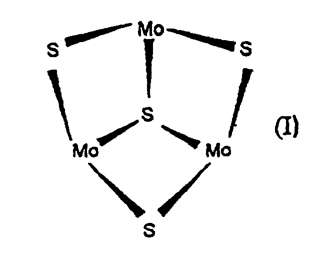 oder 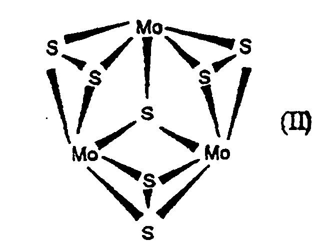 hat.

20. Verbindung nach Anspruch 19, in der L unabhängig einen Dialkyldithiophosphat-, Thioxanthat-, Dialkylphosphat-, Dialkyldithiocarbamat-, Xanthat- oder Carboxylatliganden wiedergibt.

21. Verfahren zum Schmieren eines Verbrennungsmotors, bei dem der Motor betrieben und mit einer Schmierölzusammensetzung gemäß einem der Ansprüche 1 bis 16 geschmiert wird.

22. Verwendung eines Additivs oder mehrerer Additive gemäß der Definition in einem der Ansprüche 1 bis 16 zur Steigerung von einer oder mehreren Schmiereigenschaften einer Schmierölzusammensetzung.

23. Verfahren zur Herstellung einer Verbindung, die einen dreikernigen Thiomolybdänkern umfasst, an den Liganden gebunden sind, die in der Lage sind, die Verbindung öllöslich oder öldispergierbar zu machen, bei dem in einem flüssigen Medium eine Quelle für dreikerniges Molybdän mit einer Quelle für die Liganden und einer Quelle für Schwefel unter Bildung der Verbindung umgesetzt wird.

24. Verfahren nach Anspruch 23, bei dem die Molybdänquelle und die Quelle für Schwefel eine Verbindung ist, die das Ion [Mo₃S₁₃]²⁻ oder ein dreikerniges Thiomolybdänhalogenid enthält.

25. Verfahren nach Anspruch 23 oder Anspruch 24, bei dem die Liganden Dialkyldithiophosphat, Thioxanthat, Dialkylphosphat, Dialkyldithiocarbamat, Xanthat oder Carboxylat sind.

## Revendications

1. Composition d'huile lubrifiante comprenant, ou préparée en mélangeant, une quantité dominante d'une huile de viscosité propre à la lubrification et une petite quantité, comme additif, d'au moins un composé comprenant un centre molybdène tricyclique et, lié à ce centre, des ligands capables de rendre le composé soluble dans l'huile ou dispersable dans l'huile.

2. Composition suivant la revendication 1, dans laquelle le centre contient des atomes non métalliques consistant en totalité ou en partie en atomes de soufre.

3. Composition suivant la revendication 1 ou la revendication 2, dans laquelle le centre consiste en molybdène tricyclique et soufre.

4. Composition suivant l'une quelconque des revendications précédentes, dans laquelle le composé répond à la formule Mo₃SₖLₙ ou consiste en un mélange de composés répondant à cette formule, formule dans laquelle
L représente un ligand qui est indépendant des autres ligands représentés par L lorsque n est supérieur à 1 ;
n est compris dans l'intervalle de 1 à 4 ;
k est égal à au moins 4, par exemple à une valeur comprise dans l'intervalle de 4 à 10, telle qu'une valeur de 4 à 7.

5. Composition suivant la revendication 1 ou la revendication 2, dans laquelle le composé répond à la formule Mo₃SₖEₓLₙ ou consiste en un mélange de composés répondant à cette formule, formule dans laquelle L et n répondent aux définitions suivant la revendication 4, k est égal à au moins 1, E représente l'oxygène ou le sélénium, x est égal à au moins 1 et la somme de k et x est égale à au moins 4.

6. Composition suivant la revendication 4 ou la revendication 5, dans laquelle la formule comprend en outre un groupement Q_{z}, Q représentant un composé neutre cédant des électrons et z est compris dans l'intervalle de 0 à 5 et comprend des valeurs non stoechiométriques.

7. Composition suivant l'une quelconque des revendications précédentes, dans laquelle le ou les ligands L sont représentés par une ou plusieurs des structures de formule
―X―R, 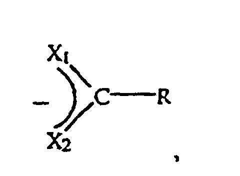 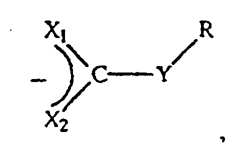 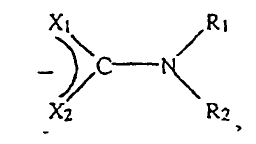 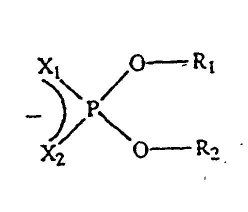
et leurs mélanges, ainsi que leurs perthio-dérivés, X, X₁, X₂ et Y étant choisis, indépendamment, dans le groupe consistant en l'oxygène et le soufre, et R₁, R₂ et R étant choisis, indépendamment, dans le groupe consistant en H et des groupes organiques qui peuvent être identiques ou différents.

8. Composition suivant la revendication 7, dans laquelle les groupes organiques représentent indépendamment des groupes alkyle, aryle substitués ou non substitués ou éther.

9. Composition suivant la revendication 8, dans laquelle les groupes sont des groupes alkyle ayant chacun un nombre de 1 à 100, par exemple de 1 à 40, tel qu'un nombre de 3 à 20, atomes de carbone.

10. Composition suivant l'une quelconque des revendications précédentes, dans laquelle les ligands L représentent, indépendamment, un ligand dialkyldithiophosphate, thioxanthate, dialkylphosphate, dialkyldithiocarbamate, xanthate ou carboxylate.

11. Composition suivant l'une quelconque des revendications précédentes, dans laquelle le poids de molybdène du composé de molybdène tricyclique est égal à une valeur d'au moins 1, par exemple de 1 à 2000, telle qu'une valeur de 5 à 1000, de préférence de 20 à 1000, ppm sur la base du poids de la composition.

12. Composition suivant l'une quelconque des revendications précédentes, dans laquelle le nombre total d'atomes de carbone dans tous les ligands ou tous les groupes organiques de L est égal à au moins 21, par exemple de 21 à 800.

13. Composition suivant l'une quelconque des revendications précédentes, dans laquelle l'huile de viscosité propre à la lubrification est pratiquement dépourvue de soufre.

14. Composition suivant l'une quelconque des revendications précédentes, comprenant en outre, ou préparée en mélangeant, au moins un additif antioxydant.

15. Composition suivant la revendication 14, dans laquelle l'antioxydant est un antioxydant contenant du cuivre, un antioxydant contenant du soufre, un antioxydant phénolique, un antioxydant contenant une amine aromatique ou leurs mélanges.

16. Composition suivant l'une quelconque des revendications précédentes, comprenant en outre un ou plusieurs dispersants, détergents, agents abaissant le point d'écoulement, modificateurs de viscosité, agents tensio-actifs ou agents anti-usure.

17. Concentré d'additifs destiné au mélange à une huile de viscosité propre à la lubrification, comprenant, ou préparée en mélangeant, un support oléagineux et 1 à 200 000 ppm en poids, par exemple une quantité de 50 à 150 000, telle qu'une quantité de 50 à 100 000 ppm en poids du molybdène d'un additif répondant à la définition suivant l'une quelconque des revendications 1 à 12, sur la base du poids du concentré.

18. Concentré d'additifs suivant la revendication 17, comprenant en outre, ou préparé en mélangeant, au moins un additif antioxydant répondant à la définition suivant la revendication 14 ou la revendication 15, ce qui fait que le concentré contient 1 à 90 % en poids, par exemple 1 à 50 % en poids d'additifs sur la base du poids du concentré.

19. Composé répondant à la formule Mo₃SₖLₙQ_{z} dans laquelle L représente, indépendamment, un ligand répondant à la définition suivant la revendication 7, n a une valeur de 1 à 4, k a une valeur d'au moins 4, par exemple de 4 à 10, telle qu'une valeur de 4 à 7 ; Q représente un composé neutre cédant des électrons et z a une valeur de 0 à 5, ledit composé comprenant un centre de structure

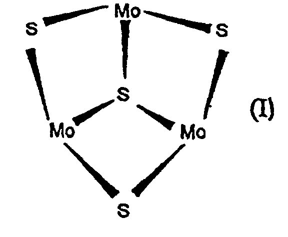

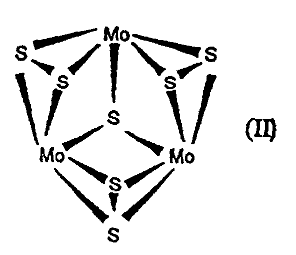

20. Composé suivant la revendication 19, dans lequel L représente, indépendamment, un ligand dialkyldithiophosphate, thioxanthate, dialkylphosphate, dialkyldithiocarbamate, xanthate ou carboxylate.

21. Procédé pour la lubrification d'un moteur à combustion interne, comprenant le fonctionnement du moteur et la lubrification du moteur avec une composition d'huile lubrifiante suivant l'une quelconque des revendications 1 à 16.

22. Utilisation d'un ou plusieurs additifs répondant à la définition suivant l'une quelconque des revendications 1 à 16, pour améliorer une ou plusieurs propriétés de lubrification d'une composition d'huile lubrifiante.

23. Procédé pour la préparation d'un composé comprenant un centre thiomolybdène tricyclique et, liés à ce centre, des ligands capables de rendre le composé soluble dans l'huile ou dispersable dans l'huile, procédé qui comprend la réaction, dans un milieu liquide, d'une source de molybdène tricyclique avec une source desdits ligands et une source de soufre pour former ledit composé.

24. Procédé suivant la revendication 23, dans lequel la source de molybdène et la source de soufre consistent en un composé contenant l'ion [Mo₃S₁₃]²⁻ ou un halogénure de thiomolybdène tricyclique.

25. Procédé suivant la revendication 23 ou la revendication 24, dans lequel les ligands sont des ligands dialkyldithiophosphate, thioxanthate, dialkylphosphate, dialkyldithiocarbamate, xanthate ou carboxylate.
